# EUROPEAN PATENT APPLICATION

(11) **EP 4 478 826 A1**
(43) Date of publication of application: **18.12.2024**
(21) Application number: 23216931.8
(22) Date of filing: 14.12.2023
(51) Int. Cl.: H04W 74/0808, H04W 52/00, H04W 74/00, H04W 76/15, H04W 84/12

(54) **APPARATUS, SYSTEM, AND METHOD OF MULTI ACCESS POINT (AP) (M-AP) OPERATION OVER A WIDE CHANNEL BANDWIDTH (BW)**

(30) Priority: 12.06.2023 US 202318333304
(71) Applicant: INTEL Corporation, Santa Clara, CA 95054 (US)
(72) Inventor: CARIOU, Laurent, Santa Clara, 95054 (US); KENNEY, Thomas J., Santa Clara, 95054 (US)
(74) Representative: Rummler, Felix

(57) **Abstract**

For example, a first Access Point (AP) may be configured to determine a joint restricted Target Wake Time (r-TWT) Service Period (SP) for Multi-AP (M-AP) operation with a second AP over a wide channel Bandwidth (BW) including a primary channel of the first AP and a primary channel of the second AP; to obtain a Transmit Opportunity (TxOP) over at least the primary channel of the first AP, the TxOP to cover at least the beginning of the joint r-TWT SP; to refrain from transmission over the wide channel BW during a first predefined time period from the beginning of the joint r-TWT SP; and to transmit an M-AP trigger frame over the wide channel BW based on a determination that a Clear-Channel-Assessment (CCA) state of the primary channel of the second AP is idle for a duration of a second predefined time period during the first predefined time period.

## Description

### TECHNICAL FIELD

Aspects described herein generally relate to Multi Access Point (AP) (M-AP) operation over a wide channel Bandwidth (BW).

### BACKGROUND

Some wireless communication networks may support communication of high-throughput data for users of wireless communication devices.

There is a need for technical solutions to provide increased and/or efficient access to the wireless communication medium.

### BRIEF DESCRIPTION OF THE DRAWINGS

For simplicity and clarity of illustration, elements shown in the figures have not necessarily been drawn to scale. For example, the dimensions of some of the elements may be exaggerated relative to other elements for clarity of presentation. Furthermore, reference numerals may be repeated among the figures to indicate corresponding or analogous elements. The figures are listed below.
Fig. 1 is a schematic block diagram illustration of a system, in accordance with some demonstrative aspects.
Fig. 2 is a schematic illustration of a Multi Access Point (M-AP) operation scheme, which may be implemented in accordance with some demonstrative aspects.
Fig. 3 is a schematic illustration of communication of a first AP and a second AP over a wide channel Bandwidth (BW), to demonstrate one or more technical issues, which may be addressed in accordance with some demonstrative aspects.
Fig. 4 is a schematic illustration of communication of a first AP and a second AP over a wide channel BW, to demonstrate one or more technical issues, which may be addressed in accordance with some demonstrative aspects.
Fig. 5 is a schematic illustration of a joint restricted Target Wake Time (r-TWT) Service Period (SP) of a first AP and a second AP over a wide channel BW, in accordance with some demonstrative aspects.
Fig. 6 is a schematic illustration of a joint r-TWT SP of a first AP and a second AP over a wide channel BW, in accordance with some demonstrative aspects.
Fig. 7 is a schematic illustration of a joint r-TWT SP of a first AP and a second AP over a wide channel BW, in accordance with some demonstrative aspects.
Fig. 8 is a schematic illustration of a joint r-TWT SP of a first AP and a second AP over a wide channel BW, in accordance with some demonstrative aspects.
Fig. 9 is a schematic flow-chart illustration of a method of M-AP operation over a wide channel BW, in accordance with some demonstrative aspects.
Fig. 10 is a schematic flow-chart illustration of a method of M-AP operation over a wide channel BW, in accordance with some demonstrative aspects.
Fig. 11 is a schematic illustration of a product of manufacture, in accordance with some demonstrative aspects.

### DETAILED DESCRIPTION

In the following detailed description, numerous specific details are set forth in order to provide a thorough understanding of some aspects. However, it will be understood by persons of ordinary skill in the art that some aspects may be practiced without these specific details. In other instances, well-known methods, procedures, components, units and/or circuits have not been described in detail so as not to obscure the discussion.

Discussions herein utilizing terms such as, for example, "processing", "computing", "calculating", "determining", "establishing", "analyzing", "checking", or the like, may refer to operation(s) and/or process(es) of a computer, a computing platform, a computing system, or other electronic computing device, that manipulate and/or transform data represented as physical (e.g., electronic) quantities within the computer's registers and/or memories into other data similarly represented as physical quantities within the computer's registers and/or memories or other information storage medium that may store instructions to perform operations and/or processes.

The terms "plurality" and "a plurality", as used herein, include, for example, "multiple" or "two or more". For example, "a plurality of items" includes two or more items.

References to "one aspect", "an aspect", "demonstrative aspect", "various aspects" etc., indicate that the aspect(s) so described may include a particular feature, structure, or characteristic, but not every aspect necessarily includes the particular feature, structure, or characteristic. Further, repeated use of the phrase "in one aspect" does not necessarily refer to the same aspect, although it may.

As used herein, unless otherwise specified the use of the ordinal adjectives "first", "second", "third" etc., to describe a common object, merely indicate that different instances of like objects are being referred to, and are not intended to imply that the objects so described must be in a given sequence, either temporally, spatially, in ranking, or in any other manner.

Some aspects may be used in conjunction with various devices and systems, for example, a User Equipment (UE), a Mobile Device (MD), a wireless station (STA), a Personal Computer (PC), a desktop computer, a mobile computer, a laptop computer, a notebook computer, a tablet computer, a server computer, a handheld computer, a handheld device, a wearable device, a sensor device, an Internet of Things (IoT) device, a Personal Digital Assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless Access Point (AP), a wired or wireless router, a wired or wireless modem, a video device, an audio device, an audio-video (A/V) device, a wired or wireless network, a wireless area network, a Wireless Video Area Network (WVAN), a Local Area Network (LAN), a Wireless LAN (WLAN), a Personal Area Network (PAN), a Wireless PAN (WPAN), and the like.

Some aspects may be used in conjunction with devices and/or networks operating in accordance with existing IEEE 802.11 standards (including IEEE 802.11-2020 (*IEEE 802.11-2020, IEEE Standard for Information Technology Telecommunications and Information Exchange between Systems Local and Metropolitan Area Networks-Specific Requirements; Part 11: Wireless LAN Medium Access Control (MAC) and Physical Layer (PHY) Specifications, December, 2020);* IEEE 802.11ax (*IEEE 802.11ax-2021, IEEE Standard for Information Technology Telecommunications and Information Exchange between Systems Local and Metropolitan Area Networks-Specific Requirements; Part 11: Wireless LAN Medium Access Control (MAC) and Physical Layer (PHY) Specifications; Amendment 1: Enhancements for High-Efficiency WLAN, February 2021);* and/or IEEE 802.11be (*IEEE P802.11be*/*D3.1Draft Standard for Information technology- Telecommunications and information exchange between systems Local and metropolitan area networks- Specific requirements; Part 11: Wireless LAN Medium Access Control (MAC) and Physical Layer (PHY) Specifications; Amendment 8: Enhancements for extremely high throughput (EHT), March 2023*)) and/or future versions and/or derivatives thereof, devices and/or networks operating in accordance with existing cellular specifications and/or protocols, and/or future versions and/or derivatives thereof, units and/or devices which are part of the above networks, and the like.

Some aspects may be used in conjunction with one way and/or two-way radio communication systems, cellular radio-telephone communication systems, a mobile phone, a cellular telephone, a wireless telephone, a Personal Communication Systems (PCS) device, a PDA device which incorporates a wireless communication device, a mobile or portable Global Positioning System (GPS) device, a device which incorporates a GPS receiver or transceiver or chip, a device which incorporates an RFID element or chip, a Multiple Input Multiple Output (MIMO) transceiver or device, a Single Input Multiple Output (SIMO) transceiver or device, a Multiple Input Single Output (MISO) transceiver or device, a device having one or more internal antennas and/or external antennas, Digital Video Broadcast (DVB) devices or systems, multistandard radio devices or systems, a wired or wireless handheld device, e.g., a Smartphone, a Wireless Application Protocol (WAP) device, or the like.

Some aspects may be used in conjunction with one or more types of wireless communication signals and/or systems, for example, Radio Frequency (RF), Infra-Red (IR), Frequency-Division Multiplexing (FDM), Orthogonal FDM (OFDM), Orthogonal Frequency-Division Multiple Access (OFDMA), FDM Time-Division Multiplexing (TDM), Time-Division Multiple Access (TDMA), Multi-User MIMO (MU-MIMO), Spatial Division Multiple Access (SDMA), Extended TDMA (E-TDMA), General Packet Radio Service (GPRS), extended GPRS, Code-Division Multiple Access (CDMA), Wideband CDMA (WCDMA), CDMA 2000, singlecarrier CDMA, multi-carrier CDMA, Multi-Carrier Modulation (MDM), Discrete Multi-Tone (DMT), Bluetooth^{®}, Global Positioning System (GPS), Wi-Fi, Wi-Max, ZigBee^{™}, Ultra-Wideband (UWB), 4G, Fifth Generation (5G), or Sixth Generation (6G) mobile networks, 3GPP, Long Term Evolution (LTE), LTE advanced, Enhanced Data rates for GSM Evolution (EDGE), or the like. Other aspects may be used in various other devices, systems and/or networks.

The term "wireless device", as used herein, includes, for example, a device capable of wireless communication, a communication device capable of wireless communication, a communication station capable of wireless communication, a portable or non-portable device capable of wireless communication, or the like. In some demonstrative aspects, a wireless device may be or may include a peripheral that may be integrated with a computer, or a peripheral that may be attached to a computer. In some demonstrative aspects, the term "wireless device" may optionally include a wireless service.

The term "communicating" as used herein with respect to a communication signal includes transmitting the communication signal and/or receiving the communication signal. For example, a communication unit, which is capable of communicating a communication signal, may include a transmitter to transmit the communication signal to at least one other communication unit, and/or a communication receiver to receive the communication signal from at least one other communication unit. The verb communicating may be used to refer to the action of transmitting or the action of receiving. In one example, the phrase "communicating a signal" may refer to the action of transmitting the signal by a first device, and may not necessarily include the action of receiving the signal by a second device. In another example, the phrase "communicating a signal" may refer to the action of receiving the signal by a first device, and may not necessarily include the action of transmitting the signal by a second device. The communication signal may be transmitted and/or received, for example, in the form of Radio Frequency (RF) communication signals, and/or any other type of signal.

As used herein, the term "circuitry" may refer to, be part of, or include, an Application Specific Integrated Circuit (ASIC), an integrated circuit, an electronic circuit, a processor (shared, dedicated or group), and/or memory (shared. Dedicated, or group), that execute one or more software or firmware programs, a combinational logic circuit, and/or other suitable hardware components that provide the described functionality. In some aspects, some functions associated with the circuitry may be implemented by one or more software or firmware modules. In some aspects, circuitry may include logic, at least partially operable in hardware.

The term "logic" may refer, for example, to computing logic embedded in circuitry of a computing apparatus and/or computing logic stored in a memory of a computing apparatus. For example, the logic may be accessible by a processor of the computing apparatus to execute the computing logic to perform computing functions and/or operations. In one example, logic may be embedded in various types of memory and/or firmware, e.g., silicon blocks of various chips and/or processors. Logic may be included in, and/or implemented as part of, various circuitry, e.g. radio circuitry, receiver circuitry, control circuitry, transmitter circuitry, transceiver circuitry, processor circuitry, and/or the like. In one example, logic may be embedded in volatile memory and/or non-volatile memory, including random access memory, read only memory, programmable memory, magnetic memory, flash memory, persistent memory, and the like. Logic may be executed by one or more processors using memory, e.g., registers, stuck, buffers, and/or the like, coupled to the one or more processors, e.g., as necessary to execute the logic.

Some demonstrative aspects may be used in conjunction with a WLAN, e.g., a WiFi network. Other aspects may be used in conjunction with any other suitable wireless communication network, for example, a wireless area network, a "piconet", a WPAN, a WVAN and the like.

Some demonstrative aspects may be used in conjunction with a wireless communication network communicating over a sub-10 Gigahertz (GHz) frequency band, for example, a 2.4GHz frequency band, a 5GHz frequency band, a 6GHz frequency band, and/or any other frequency band below 10GHz.

Some demonstrative aspects may be used in conjunction with a wireless communication network communicating over an Extremely High Frequency (EHF) band (also referred to as the "millimeter wave (mmWave)" frequency band), for example, a frequency band within the frequency band of between 20Ghz and 300GHz, for example, a frequency band above 45GHz, e.g., a 60GHz frequency band, and/or any other mmWave frequency band. Some demonstrative aspects may be used in conjunction with a wireless communication network communicating over the sub-10 GHz frequency band and/or the mmWave frequency band, e.g., as described below. However, other aspects may be implemented utilizing any other suitable wireless communication frequency bands, for example, a 5G frequency band, a frequency band below 20GHz, a Sub 1 GHz (S1G) band, a WLAN frequency band, a WPAN frequency band, and the like.

Some demonstrative aspects may be implemented by an mmWave STA (mSTA), which may include for example, a STA having a radio transmitter, which is capable of operating on a channel that is within the mmWave frequency band. In one example, mmWave communications may involve one or more directional links to communicate at a rate of multiple gigabits per second, for example, at least 1 Gigabit per second, e.g., at least 7 Gigabit per second, at least 30 Gigabit per second, or any other rate.

In some demonstrative aspects, the mmWave STA may include a Directional Multi-Gigabit (DMG) STA, which may be configured to communicate over a DMG frequency band. For example, the DMG band may include a frequency band wherein the channel starting frequency is above 45 GHz.

In some demonstrative aspects, the mmWave STA may include an Enhanced DMG (EDMG) STA, which may be configured to implement one or more mechanisms, which may be configured to enable Single User (SU) and/or Multi-User (MU) communication of Downlink (DL) and/or Uplink frames (UL) using a MIMO scheme. For example, the EDMG STA may be configured to implement one or more channel bonding mechanisms, which may, for example, support communication over a channel bandwidth (BW) (also referred to as a "wide channel", an "EDMG channel", or a "bonded channel") including two or more channels, e.g., two or more 2.16 GHz channels. For example, the channel bonding mechanisms may include, for example, a mechanism and/or an operation whereby two or more channels, e.g., 2.16 GHz channels, can be combined, e.g., for a higher bandwidth of packet transmission, for example, to enable achieving higher data rates, e.g., when compared to transmissions over a single channel. Some demonstrative aspects are described herein with respect to communication over a channel BW including two or more 2.16 GHz channels, however other aspects may be implemented with respect to communications over a channel bandwidth, e.g., a "wide" channel, including or formed by any other number of two or more channels, for example, an aggregated channel including an aggregation of two or more channels. For example, the EDMG STA may be configured to implement one or more channel bonding mechanisms, which may, for example, support an increased channel bandwidth, for example, a channel BW of 4.32 GHz, a channel BW of 6.48 GHz, a channel BW of 8.64 GHz, and/or any other additional or alternative channel BW. The EDMG STA may perform other additional or alternative functionality.

In other aspects, the mmWave STA may include any other type of STA and/or may perform other additional or alternative functionality. Other aspects may be implemented by any other apparatus, device and/or station.

The term "antenna", as used herein, may include any suitable configuration, structure and/or arrangement of one or more antenna elements, components, units, assemblies and/or arrays. In some aspects, the antenna may implement transmit and receive functionalities using separate transmit and receive antenna elements. In some aspects, the antenna may implement transmit and receive functionalities using common and/or integrated transmit/receive elements. The antenna may include, for example, a phased array antenna, a single element antenna, a set of switched beam antennas, and/or the like.

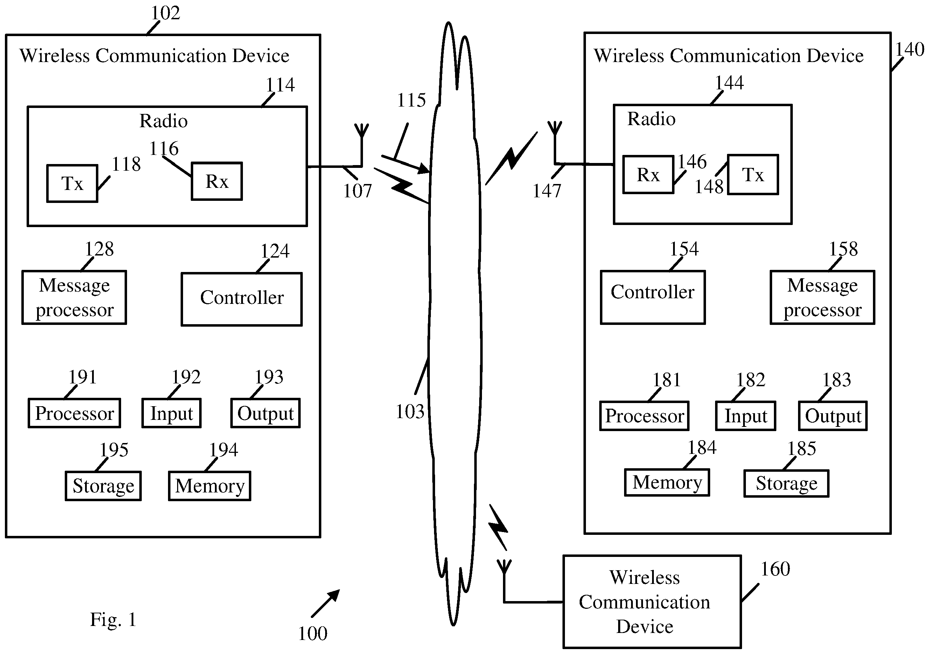

Reference is made to Fig. 1, which schematically illustrates a system 100, in accordance with some demonstrative aspects.

As shown in Fig. 1, in some demonstrative aspects, system 100 may include one or more wireless communication devices. For example, system 100 may include a wireless communication device 102, a wireless communication device 140, a wireless communication device 160, and/or one more other devices.

In some demonstrative aspects, devices 102, 140, and/or 160 may include a mobile device or a non-mobile, e.g., a static, device.

For example, devices 102, 140, and/or 160 may include, for example, a UE, an MD, a STA, an AP, a PC, a desktop computer, a mobile computer, a laptop computer, an Ultrabook^{™} computer, a notebook computer, a tablet computer, a server computer, a handheld computer, an Internet of Things (IoT) device, a sensor device, a handheld device, a wearable device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "Carry Small Live Large" (CSLL) device, an Ultra Mobile Device (UMD), an Ultra Mobile PC (UMPC), a Mobile Internet Device (MID), an "Origami" device or computing device, a device that supports Dynamically Composable Computing (DCC), a context-aware device, a video device, an audio device, an A/V device, a Set-Top-Box (STB), a Blu-ray disc (BD) player, a BD recorder, a Digital Video Disc (DVD) player, a High Definition (HD) DVD player, a DVD recorder, a HD DVD recorder, a Personal Video Recorder (PVR), a broadcast HD receiver, a video source, an audio source, a video sink, an audio sink, a stereo tuner, a broadcast radio receiver, a flat panel display, a Personal Media Player (PMP), a digital video camera (DVC), a digital audio player, a speaker, an audio receiver, an audio amplifier, a gaming device, a data source, a data sink, a Digital Still camera (DSC), a media player, a Smartphone, a television, a music player or the like.

In some demonstrative aspects, device 102 may include, for example, one or more of a processor 191, an input unit 192, an output unit 193, a memory unit 194, and/or a storage unit 195; and/or device 140 may include, for example, one or more of a processor 181, an input unit 182, an output unit 183, a memory unit 184, and/or a storage unit 185. Devices 102 and/or 140 may optionally include other suitable hardware components and/or software components. In some demonstrative aspects, some or all of the components of one or more of devices 102 and/or 140 may be enclosed in a common housing or packaging, and may be interconnected or operably associated using one or more wired or wireless links. In other aspects, components of one or more of devices 102 and/or 140 may be distributed among multiple or separate devices.

In some demonstrative aspects, processor 191 and/or processor 181 may include, for example, a Central Processing Unit (CPU), a Digital Signal Processor (DSP), one or more processor cores, a single-core processor, a dual-core processor, a multiple-core processor, a microprocessor, a host processor, a controller, a plurality of processors or controllers, a chip, a microchip, one or more circuits, circuitry, a logic unit, an Integrated Circuit (IC), an Application-Specific IC (ASIC), or any other suitable multi-purpose or specific processor or controller. Processor 191 may execute instructions, for example, of an Operating System (OS) of device 102 and/or of one or more suitable applications. Processor 181 may execute instructions, for example, of an Operating System (OS) of device 140 and/or of one or more suitable applications.

In some demonstrative aspects, input unit 192 and/or input unit 182 may include, for example, a keyboard, a keypad, a mouse, a touch-screen, a touch-pad, a track-ball, a stylus, a microphone, or other suitable pointing device or input device. Output unit 193 and/or output unit 183 may include, for example, a monitor, a screen, a touch-screen, a flat panel display, a Light Emitting Diode (LED) display unit, a Liquid Crystal Display (LCD) display unit, a plasma display unit, one or more audio speakers or earphones, or other suitable output devices.

In some demonstrative aspects, memory unit 194 and/or memory unit 184 includes, for example, a Random Access Memory (RAM), a Read Only Memory (ROM), a Dynamic RAM (DRAM), a Synchronous DRAM (SD-RAM), a flash memory, a volatile memory, a non-volatile memory, a cache memory, a buffer, a short term memory unit, a long term memory unit, or other suitable memory units. Storage unit 195 and/or storage unit 185 may include, for example, a hard disk drive, a disk drive, a solid-state drive (SSD), and/or other suitable removable or non-removable storage units. Memory unit 194 and/or storage unit 195, for example, may store data processed by device 102. Memory unit 184 and/or storage unit 185, for example, may store data processed by device 140.

In some demonstrative aspects, wireless communication devices 102, 140, and/or 160 may be capable of communicating content, data, information and/or signals via a wireless medium (WM) 103. In some demonstrative aspects, wireless medium 103 may include, for example, a radio channel, an RF channel, a WiFi channel, a cellular channel, a 5G channel, an IR channel, a Bluetooth (BT) channel, a Global Navigation Satellite System (GNSS) Channel, and the like.

In some demonstrative aspects, WM 103 may include one or more wireless communication frequency bands and/or channels. For example, WM 103 may include one or more channels in a sub-10Ghz wireless communication frequency band, for example, a 2.4GHz wireless communication frequency band, one or more channels in a 5GHz wireless communication frequency band, and/or one or more channels in a 6GHz wireless communication frequency band. In another example, WM 103 may additionally or alternatively include one or more channels in an mmWave wireless communication frequency band. In other aspects, WM 103 may include any other type of channel over any other frequency band.

In some demonstrative aspects, device 102, device 140, and/or device 160 may include one or more radios including circuitry and/or logic to perform wireless communication between devices 102, 140, 160, and/or one or more other wireless communication devices. For example, device 102 may include one or more radios 114, and/or device 140 may include one or more radios 144.

In some demonstrative aspects, radios 114 and/or radios 144 may include one or more wireless receivers (Rx) including circuitry and/or logic to receive wireless communication signals, RF signals, frames, blocks, transmission streams, packets, messages, data items, and/or data. For example, a radio 114 may include at least one receiver 116, and/or a radio 144 may include at least one receiver 146.

In some demonstrative aspects, radios 114 and/or 144 may include one or more wireless transmitters (Tx) including circuitry and/or logic to transmit wireless communication signals, RF signals, frames, blocks, transmission streams, packets, messages, data items, and/or data. For example, a radio 114 may include at least one transmitter 118, and/or a radio 144 may include at least one transmitter 148.

In some demonstrative aspects, radios 114 and/or 144, transmitters 118 and/or 148, and/or receivers 116 and/or 146 may include circuitry; logic; Radio Frequency (RF) elements, circuitry and/or logic; baseband elements, circuitry and/or logic; modulation elements, circuitry and/or logic; demodulation elements, circuitry and/or logic; amplifiers; analog to digital and/or digital to analog converters; filters; and/or the like. For example, radios 114 and/or 144 may include or may be implemented as part of a wireless Network Interface Card (NIC), and the like.

In some demonstrative aspects, radios 114 and/or 144 may be configured to communicate over a 2.4GHz band, a 5GHz band, a 6GHz band, and/or any other band, for example, a directional band, e.g., an mmWave band, a 5G band, an S1G band, and/or any other band.

In some demonstrative aspects, radios 114 and/or 144 may include, or may be associated with one or more antennas.

In some demonstrative aspects, device 102 may include one or more antennas 107, and/or device 140 may include on or more antennas 147.

Antennas 107 and/or 147 may include any type of antennas suitable for transmitting and/or receiving wireless communication signals, blocks, frames, transmission streams, packets, messages and/or data. For example, antennas 107 and/or 147 may include any suitable configuration, structure and/or arrangement of one or more antenna elements, components, units, assemblies and/or arrays. In some aspects, antennas 107 and/or 147 may implement transmit and receive functionalities using separate transmit and receive antenna elements. In some aspects, antennas 107 and/or 147 may implement transmit and receive functionalities using common and/or integrated transmit/receive elements.

In some demonstrative aspects, device 102 may include a controller 124, and/or device 140 may include a controller 154. Controller 124 may be configured to perform and/or to trigger, cause, instruct and/or control device 102 to perform, one or more communications, to generate and/or communicate one or more messages and/or transmissions, and/or to perform one or more functionalities, operations and/or procedures between devices 102, 140, 160 and/or one or more other devices; and/or controller 154 may be configured to perform, and/or to trigger, cause, instruct and/or control device 140 to perform, one or more communications, to generate and/or communicate one or more messages and/or transmissions, and/or to perform one or more functionalities, operations and/or procedures between devices 102, 140, 160 and/or one or more other devices, e.g., as described below.

In some demonstrative aspects, controllers 124 and/or 154 may include, or may be implemented, partially or entirely, by circuitry and/or logic, e.g., one or more processors including circuitry and/or logic, memory circuitry and/or logic, Media-Access Control (MAC) circuitry and/or logic, Physical Layer (PHY) circuitry and/or logic, baseband (BB) circuitry and/or logic, a BB processor, a BB memory, Application Processor (AP) circuitry and/or logic, an AP processor, an AP memory, and/or any other circuitry and/or logic, configured to perform the functionality of controllers 124 and/or 154, respectively. Additionally or alternatively, one or more functionalities of controllers 124 and/or 154 may be implemented by logic, which may be executed by a machine and/or one or more processors, e.g., as described below.

In one example, controller 124 may include circuitry and/or logic, for example, one or more processors including circuitry and/or logic, to cause, trigger and/or control a wireless device, e.g., device 102, and/or a wireless station, e.g., a wireless STA implemented by device 102, to perform one or more operations, communications and/or functionalities, e.g., as described herein. In one example, controller 124 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In one example, controller 154 may include circuitry and/or logic, for example, one or more processors including circuitry and/or logic, to cause, trigger and/or control a wireless device, e.g., device 140, and/or a wireless station, e.g., a wireless STA implemented by device 140, to perform one or more operations, communications and/or functionalities, e.g., as described herein. In one example, controller 154 may include at least one memory, e.g., coupled to the one or more processors, which may be configured, for example, to store, e.g., at least temporarily, at least some of the information processed by the one or more processors and/or circuitry, and/or which may be configured to store logic to be utilized by the processors and/or circuitry.

In some demonstrative aspects, at least part of the functionality of controller 124 may be implemented as part of one or more elements of radio 114, and/or at least part of the functionality of controller 154 may be implemented as part of one or more elements of radio 144.

In other aspects, the functionality of controller 124 may be implemented as part of any other element of device 102, and/or the functionality of controller 154 may be implemented as part of any other element of device 140.

In some demonstrative aspects, device 102 may include a message processor 128 configured to generate, process and/or access one or messages communicated by device 102.

In one example, message processor 128 may be configured to generate one or more messages to be transmitted by device 102, and/or message processor 128 may be configured to access and/or to process one or more messages received by device 102, e.g., as described below.

In one example, message processor 128 may include at least one first component configured to generate a message, for example, in the form of a frame, field, information element and/or protocol data unit, for example, a MAC Protocol Data Unit (MPDU); at least one second component configured to convert the message into a PHY Protocol Data Unit (PPDU), for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 128 may be configured to perform any other additional or alternative functionality and/or may include any other additional or alternative components to generate and/or process a message to be transmitted.

In some demonstrative aspects, device 140 may include a message processor 158 configured to generate, process and/or access one or more messages communicated by device 140.

In one example, message processor 158 may be configured to generate one or more messages to be transmitted by device 140, and/or message processor 158 may be configured to access and/or to process one or more messages received by device 140, e.g., as described below.

In one example, message processor 158 may include at least one first component configured to generate a message, for example, in the form of a frame, field, information element and/or protocol data unit, for example, an MPDU; at least one second component configured to convert the message into a PPDU, for example, by processing the message generated by the at least one first component, e.g., by encoding the message, modulating the message and/or performing any other additional or alternative processing of the message; and/or at least one third component configured to cause transmission of the message over a wireless communication medium, e.g., over a wireless communication channel in a wireless communication frequency band, for example, by applying to one or more fields of the PPDU one or more transmit waveforms. In other aspects, message processor 158 may be configured to perform any other additional or alternative functionality and/or may include any other additional or alternative components to generate and/or process a message to be transmitted.

In some demonstrative aspects, message processors 128 and/or 158 may include, or may be implemented, partially or entirely, by circuitry and/or logic, e.g., one or more processors including circuitry and/or logic, memory circuitry and/or logic, MAC circuitry and/or logic, PHY circuitry and/or logic, BB circuitry and/or logic, a BB processor, a BB memory, AP circuitry and/or logic, an AP processor, an AP memory, and/or any other circuitry and/or logic, configured to perform the functionality of message processors 128 and/or 158, respectively. Additionally or alternatively, one or more functionalities of message processors 128 and/or 158 may be implemented by logic, which may be executed by a machine and/or one or more processors, e.g., as described below.

In some demonstrative aspects, at least part of the functionality of message processor 128 may be implemented as part of radio 114, and/or at least part of the functionality of message processor 158 may be implemented as part of radio 144.

In some demonstrative aspects, at least part of the functionality of message processor 128 may be implemented as part of controller 124, and/or at least part of the functionality of message processor 158 may be implemented as part of controller 154.

In other aspects, the functionality of message processor 128 may be implemented as part of any other element of device 102, and/or the functionality of message processor 158 may be implemented as part of any other element of device 140.

In some demonstrative aspects, at least part of the functionality of controller 124 and/or message processor 128 may be implemented by an integrated circuit, for example, a chip, e.g., a System on Chip (SoC). In one example, the chip or SoC may be configured to perform one or more functionalities of one or more radios 114. For example, the chip or SoC may include one or more elements of controller 124, one or more elements of message processor 128, and/or one or more elements of one or more radios 114. In one example, controller 124, message processor 128, and one or more radios 114 may be implemented as part of the chip or SoC.

In other aspects, controller 124, message processor 128 and/or one or more radios 114 may be implemented by one or more additional or alternative elements of device 102.

In some demonstrative aspects, at least part of the functionality of controller 154 and/or message processor 158 may be implemented by an integrated circuit, for example, a chip, e.g., a SoC. In one example, the chip or SoC may be configured to perform one or more functionalities of one or more radios 144. For example, the chip or SoC may include one or more elements of controller 154, one or more elements of message processor 158, and/or one or more elements of one or more radios 144. In one example, controller 154, message processor 158, and one or more radios 144 may be implemented as part of the chip or SoC.

In other aspects, controller 154, message processor 158 and/or one or more radios 144 may be implemented by one or more additional or alternative elements of device 140.

In some demonstrative aspects, device 102, device 140, and/or device 160 may include, operate as, perform the role of, and/or perform one or more functionalities of, one or more STAs. For example, device 102 may include at least one STA, device 140 may include at least one STA, and/or device 160 may include at least one STA.

In some demonstrative aspects, device 102, device 140, and/or device 160 may include, operate as, perform the role of, and/or perform one or more functionalities of, one or more Extremely High Throughput (EHT) STAs. For example, device 102 may include, operate as, perform the role of, and/or perform one or more functionalities of, one or more EHT STAs, and/or device 140 may include, operate as, perform the role of, and/or perform one or more functionalities of, one or more EHT STAs.

In some demonstrative aspects, for example, device 102, device 140, and/or device 160 may be configured to perform one or more operations, and/or functionalities of a WiFi 8 STA.

In other aspects, for example, devices 102, 140 and/or 160 may be configured to perform one or more operations, and/or functionalities of an Ultra High Reliability (UHR) STA.

In other aspects, for example, devices 102, 140, and/or 160 may be configured to perform one or more operations, and/or functionalities of any other additional or alternative type of STA.

In other aspects, device 102, device 140, and/or device 160 may include, operate as, perform the role of, and/or perform one or more functionalities of, any other wireless device and/or station, e.g., a WLAN STA, a WiFi STA, and the like.

In some demonstrative aspects, device 102, device 140, and/or device 160 may be configured operate as, perform the role of, and/or perform one or more functionalities of, an Access Point (AP), e.g., a High Throughput (HT) AP STA, a High Efficiency (HE) AP STA, an EHT AP STA and/or a UHR AP STA.

In some demonstrative aspects, device 102, device 140, and/or device 160 may be configured to operate as, perform the role of, and/or perform one or more functionalities of, a non-AP STA, e.g., an HT non-AP STA, an HE non-AP STA, an EHT non-AP STA and/or a UHR non-AP STA.

In other aspects, device 102, device 140, and/or device 160 may operate as, perform the role of, and/or perform one or more functionalities of, any other additional or alternative device and/or station.

In one example, a station (STA) may include a logical entity that is a singly addressable instance of a medium access control (MAC) and physical layer (PHY) interface to the wireless medium (WM). The STA may perform any other additional or alternative functionality.

In one example, an AP may include an entity that contains one station (STA) and provides access to the distribution services, via the wireless medium (WM) for associated STAs. An AP may include a STA and a distribution system access function (DSAF). The AP may perform any other additional or alternative functionality.

In some demonstrative aspects devices 102, 140, and/or 160 may be configured to communicate in an HT network, an HE network, an EHT network, a UHR network, and/or any other network.

In some demonstrative aspects, devices 102, 140 and/or 160 may be configured to operate in accordance with one or more Specifications, for example, including one or more *IEEE 802.11 Specifications,* e.g., an *IEEE 802.11-2020 Specification, an IEEE 802.11ax Specification,* an *IEEE 802.11be Specification*, and/or any other specification and/or protocol.

In some demonstrative aspects, device 102, and/or device 140 may include, operate as, perform a role of, and/or perform the functionality of, one or more AP STAs. For example, device 102 may include, operate as, perform a role of, and/or perform the functionality of, at least one AP STA, and/or device 140 may include, operate as, perform a role of, and/or perform the functionality of, at least one AP STA.

In some demonstrative aspects, device 102 may include, operate as, perform a role of, and/or perform the functionality of, a first AP STA.

In some demonstrative aspects, device 140 may include, operate as, perform a role of, and/or perform the functionality of, a second AP STA.

In some demonstrative aspects, device 160 may include, operate as, perform a role of, and/or perform the functionality of, at least one non-AP STA.

In other aspects, device 102, device 140, and/or device 160 may include, operate as, perform a role of, and/or perform the functionality of any other additional or alternative type of STA.

In some demonstrative aspects, device 102, device 140, and/or device 160 may be configured to implement one or more operations and/or functionalities of a restricted Target Wake Time (r-TWT) mechanism, e.g., as described below.

In some demonstrative aspects, the r-TWT mechanism may be configured to provide a technical solution, for example, to improve latency and/or quality of service (QoS), e.g., as described below.

In one example, the r-TWT mechanism may be configured to define one or more rules, which may force all STAs within a Basic Service Set (BSS) to end an ongoing Transmit Opportunity (TxOP), for example, when the TxOP will overlap with a start of an r-TWT Service Period (SP).

Accordingly, there may be a contention period at the beginning of the r-TWT SP. For example, an AP may have a higher chance to gain access to a wireless medium, and to schedule prioritized traffic, e.g., during the r-TWT SP.

In some demonstrative aspects, one or more functions of the r-TWT mechanism may be extended, for example, to provide a technical solution, for example, to support one or more other key system features, which may not be possible prior to the r-TWT.

In some demonstrative aspects, one or more functions of the r-TWT mechanism may be extended, for example, to provide a technical solution to enhance an operation of a Fractional Frequency Reuse (FFR) technique, e.g., as described below.

In one example, the FFR technique may be configured to provide a technical solution, for example, for implementation in enterprise scenarios and/or the like.

In some demonstrative aspects, the FFR technique may be configured to provide a technical solution, which may be implemented to support Spatial Reuse (SR) on an entire BW, for example, for communication to and/or from STAs, which may be close to a center of BSSs of APs, for example, where there is less interference from neighbor Overlapping BSSs (OBSSs), e.g., as described below.

In some demonstrative aspects, the FFR technique may be configured to provide a technical solution to support utilizing one or more frequency-reuse mechanisms, e.g., Frequency-Division Multiple Access (FDMA) and/or OFDMA, and/or time-reuse mechanisms, e.g., TDMA, for communication to and/or from STAs close to an edge of the BSS, e.g., where there is higher interference from neighbor OBSSs, for example, to minimize interference from STAs of the neighbor OBSSs, e.g., as described below.

In some demonstrative aspects, the FFR technique may be configured to provide a technical solution to support multi-AP operation, e.g., as described below.

In some demonstrative aspects, the multi-AP operation mechanism may be implemented to support a first AP and a second AP to share one or more shared communication resources, e.g., as described below.

In some demonstrative aspects, the FFR may be used to support multi-AP operation, for example, by a first AP and a second AP, which may operate on a same wide channel BW, e.g., with different primary channels.

In some demonstrative aspects, the first AP and the second AP may use different primary channels, for example, in order to support the frequency reuse and interference avoidance, e.g., even in presence of legacy STAs.

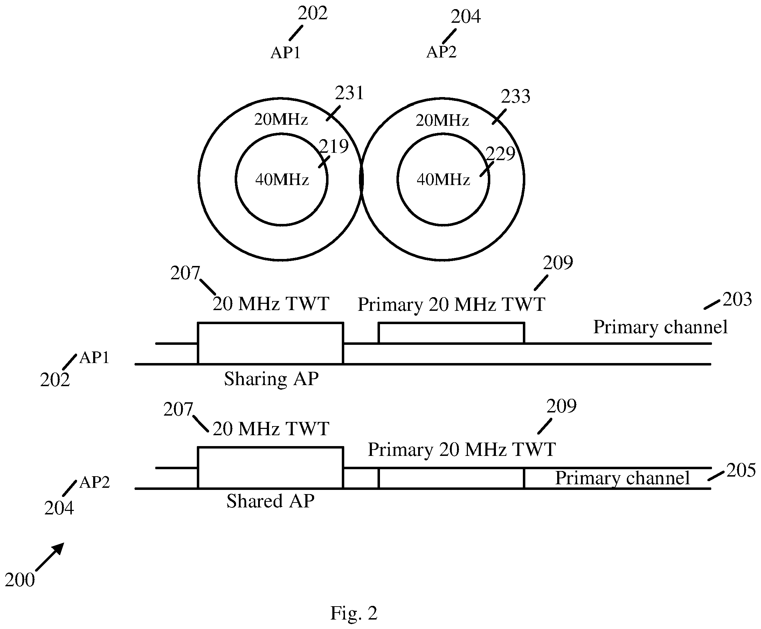

Reference is made to Fig. 2, which schematically illustrates a multi-AP operation scheme 200, which may be implemented in accordance with some demonstrative aspects.

In some demonstrative aspects, as shown in Fig. 2, an AP 202, e.g., an AP implemented by device 102 (Fig. 1), and/or an AP 204, e.g., an AP implemented by device 140 (Fig. 1), may be configured to share the same 40MHz channel. For example, as shown in Fig. 2, each of AP 202 and AP 204 may operate on a different 20MHz primary channel in the shared 40MHz channel.

In some demonstrative aspects, the different primary channels may be utilized, for example, to support a possibility of an AP to fall back to the primary 20MHz channel, for example, only when a secondary channel is busy, e.g., which may not allow using of the full 20MHz bandwidth.

For example, as shown in Fig. 2, AP 202 may operate on a first primary channel, e.g., a first 20MHz channel 203, in the shared 40MHz channel. For example, as shown in Fig. 2, AP 204 may operate on a second primary channel, e.g., a 20MHz channel 205, different from the first primary channel, in the shared 40MHz channel.

For example, in some cases, AP 202 and AP 204 may end up, e.g., may very likely end up, out of synchronization. This may result in a situation where contention periods on the 20MHz channel 203 and the 20MHz channel 205 may not align. For example, this misalignment of both 20MHz channels may result in a situation, where the AP 202 and the AP 204 may not really have a chance to operate over the wide 40MHz bandwidth, and/or to have multi-AP coordination between the AP 202 and AP 204, e.g., as described below.

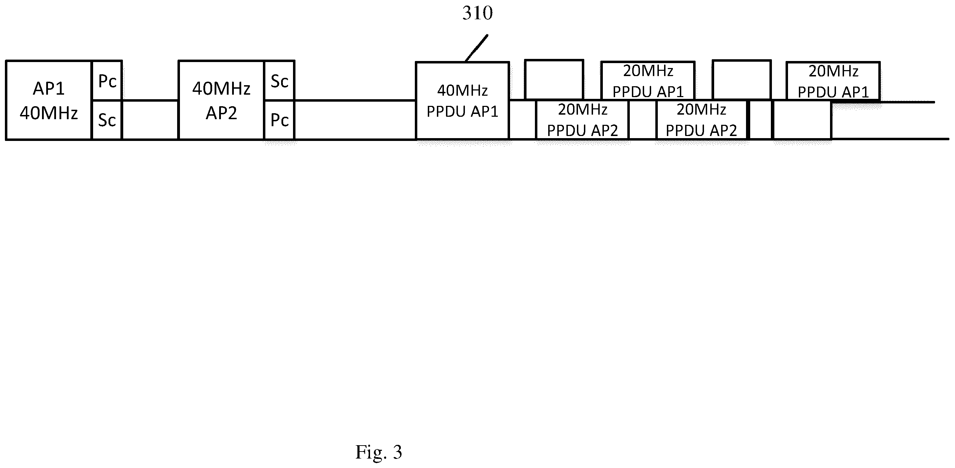

Reference is made to Fig. 3, which schematically illustrates communication of a first AP and a second AP over a wide channel BW, to demonstrate one or more technical issues, which may be addressed in accordance with some demonstrative aspects.

As shown in Fig. 3, the first AP and the second AP may share the same 40MHz channel.

For example, as shown in Fig. 3, each of the first AP and the second AP may operate on a different 20MHz primary channel in the shared 40MHz channel.

For example, as shown in Fig. 3, the first AP may operate on a first primary channel, e.g., a first 20MHz channel, in the shared 40MHz channel.

For example, as shown in Fig. 3, the second AP may operate on a second primary channel, e.g., a second 20MHz channel, different from the first primary channel, in the shared 40MHz channel.

For example, as shown in Fig. 3, the first AP may be able to transmit a frame 310 over the shared 40MHz channel, e.g., when the first AP and the second AP are substantially synchronized.

For example, as shown in Fig. 3, in some cases, the first AP and the second AP may end up, e.g., may very likely end up, out of synchronization. This may result in a situation where contention periods on the first 20MHz channel and the second 20MHz channel may not align.

For example, as shown in Fig. 3, this misalignment of both 20MHz channels may result in a situation, where the first AP and the second AP may not really have a chance to operate over the wide 40MHz bandwidth, e.g., after transmission of frame 310.

For example, as shown in Fig. 3, there may be two contention domains on the two 20MHz primary channels. Accordingly, chances to operate over the wide 40MHz bandwidth may be very limited. For example, this scenario may highly limit AP coordination schemes.

For example, as shown in Fig. 3, the usage of an FFR technique for multi-AP operation may result in less overall throughput, for example, when there is no coordination between the first AP and the second AP.

Referring back to Fig. 2, in some demonstrative aspects, AP 202 and/or AP 204 may be configured to communicate according to a multi-AP operation mechanism, which may be configured to utilize one or more TWT periods, e.g., r-TWT periods, to support multi-AP coordination between AP 202 and AP 204, e.g., as described below.

In some demonstrative aspects, the multi-AP operation mechanism may be configured to utilize the TWT periods to support coordination of spatial reuse of communication resources, for example, in a relatively easy and/or efficient way, e.g., as described below.

In some demonstrative aspects, the multi-AP operation mechanism may be configured to utilize the TWT periods to support spatial reuse, for example, based on transmit power control, e.g., as described below.

In some demonstrative aspects, as shown in Fig. 2, a 40MHz TWT period 207, e.g., a 40MHz r-TWT period, may be utilized to coordinate sharing of the 40MHz channel, for example, according to a spatial reuse technique. For example, the 40MHz TWT period 207 may be utilized by the AP 202 and/or the AP 204 to serve one or more clients that are relatively close to their serving AP, e.g., STAs in an area 219 around AP 202 and/or in an area 229 around AP 204.

In some demonstrative aspects, as shown in Fig. 2, a 20MHz TWT period 209, e.g., a 20MHz r-TWT period, may be utilized to coordinate communications over the primary 20MHz channels, for example, for STAs, which may not be suitable for the spatial reuse. For example, the 20MHz TWT period 209 may be utilized by the AP 202 and/or the AP 204 to serve one or more clients that are relatively far from their serving AP, and cannot benefit from the spatial reuse, STAs in an area 231 around AP 202 and/or in an area 233 around AP 204.

In some use cases, scenarios, deployments, and/or implementations, it may be more complex and/or difficult to ensure the ability of AP 202 and/or the AP204 to gain access to the wide 40MHz BW during the r-TWT period, e.g., as described below. For example, in some realistic deployments there may be a relatively large amount of contention with STAs and/or other third party APs, which may affect multi-AP coordination, e.g., as described below.

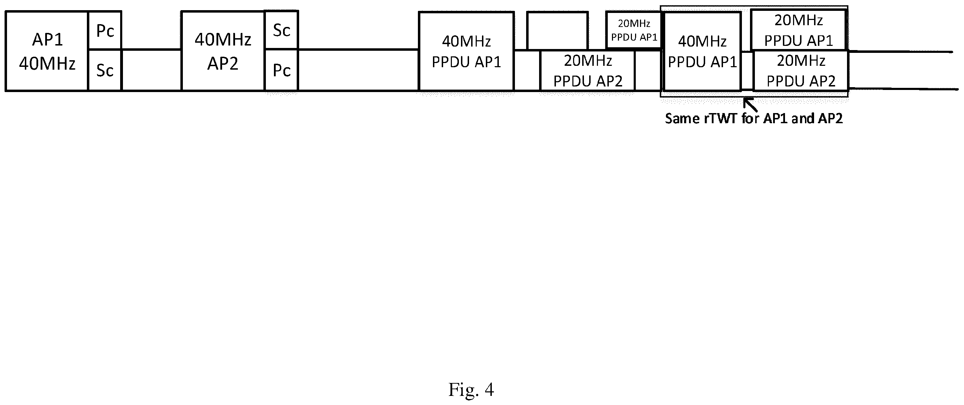

Reference is made to Fig. 4, which schematically illustrates communication of a first AP and a second AP over a wide channel BW, to demonstrate one or more technical issues, which may be addressed in accordance with some demonstrative aspects.

As shown in Fig. 4, the first AP and the second AP may share the same 40MHz channel.

For example, as shown in Fig. 4, each of the first AP and the second AP may operate on a different 20MHz primary channel in the shared 40MHz channel.

For example, as shown in Fig. 4, the first AP may operate on a first primary channel, e.g., a first 20MHz channel, in the shared 40MHz channel.

For example, as shown in Fig. 4, the second AP may operate on a second primary channel, e.g., a second 20MHz channel, different from the first primary channel, in the shared 40MHz channel.

For example, it may be ensured that a start of a TxOP and contention periods are aligned between BSSs of a group of coordinated APs, for example, by using a coordinated r-TWTs. For example an advertisement by a group of coordinated APs of an overlapping r-TWT may highly increase the chances that channel access may be gained on a wide channel BW for the group of coordinated APs.

For example, as shown in Fig. 4, it may be ensured that a start of a TxOP and contention periods may be aligned between BSS of the first AP and the BSS of the second AP, for example, by using coordinated r-TWTs. Accordingly, chances that channel access may be gained on the 40MHZ wide channel BW for the first AP and the first AP may be highly increased.

For example, the first AP and the second AP may perform one or more operations of a multi-AP operation mechanism to coordinate r-TWTs, e.g., as described below.

For example, the multi-AP operation mechanism may be configured to define periods of time, during which M-AP coordination may be possible.

For example, the multi-AP operation mechanism may be configured to define periods of time, during which cooperative SR (C-SR) and/or other modes, e.g., more advanced coordinated PHY modes, may be used on an entire channel BW.

For example, the multi-AP operation mechanism may be configured to define periods of time, during which operation will be limited to a lower bandwidth, e.g., for interference avoidance.

In one example, as shown in Fig. 4, the multi-AP operation may work well, for example, when there is a contention period at the start of the r-TWT SP, e.g., precisely at the start of the r-TWT SP.

However, this requirement may not be clearly enforced, e.g., as STAs may be forced to end their TxOP before the start of the r-TWT SP, but not exactly at the start of the r-TWT SP, for example, according to an *IEEE 802.11 standard.*

For example, there may be some probability, e.g., a large probability, that a STA will end its TxOP a little time before the start of the r-TWT SP. According to this example, an AP may try and get a TxOP for the r-TWT SP slightly before the start of the r-TWT SP.

For example, the two APs, which are to participate in the M-AP operation, may likely access the channel on their primary channel, e.g., and not on the wide channel BW, for example, before the start of the r-TWT SP. For example, a first AP may access the wide BW cannel on its own 20MHz primary channel, and/or a second AP may access the wide channel BW its own 20MHz primary channel, for example, before the start of the r-TWT SP, e.g., and not on the wide 40MHz channel BW. For example, this situation may result in a situation where it may not be guaranteed that an AP of the two APs will be able to get a TxOP over the wide 40MHz channel BW.

Referring back to Fig. 1, in some demonstrative aspects, devices 102, 140 and/or 160 may be configured to implement a multi-AP operation mechanism, which may be configured to utilize an r-TWT, for example, to coordinate multi-AP operation, e.g., as described below.

In some demonstrative aspects, the r-TWT may be utilized by the multi-AP operation mechanism, for example, to provide a technical solution to support improved multi-AP performance, e.g., as described below.

In some demonstrative aspects, the multi-AP operation mechanism may be implemented to provide a technical solution to improve system throughput and/or to provide any other additional or alternative gains.

In some demonstrative aspects, devices 102, 140 and/or 160 may be configured to implement a multi-AP operation mechanism, which may be configured to address one or more issues when utilizing an r-TWT, for example, to coordinate multi-AP operation, e.g., as described below.

In some demonstrative aspects, device 102, device 140, and/or device 160 may be configured to implement one or more operations and/or functionalities of a joint r-TWT SP mechanism, e.g., as described below.

In some demonstrative aspects, the joint r-TWT SP mechanism may be configured to provide a technical solution to address one or more issues of r-TWTs, for example, to coordinate multi-AP operation, e.g., as described below.

In some demonstrative aspects, the joint r-TWT SP mechanism may be configured to provide a technical solution to support Multi-AP (M-AP) operation over a wide channel BW, e.g., as descried below.

In some demonstrative aspects, the joint r-TWT SP mechanism may be configured to provide a technical solution to support M-AP operation of a first AP and a second AP over a wide channel BW, e.g., as descried below.

In some demonstrative aspects, the joint r-TWT SP mechanism may be configured to provide a technical solution to support the M-AP operation over the wide channel BW including a primary channel of the first AP and a primary channel of the second AP, e.g., as descried below.

In some demonstrative aspects, the joint r-TWT SP mechanism may be configured to provide a technical solution to support channel access to the wide channel BW during the r-TWT SP, e.g., as descried below.

In some demonstrative aspects, the joint r-TWT SP mechanism may be configured to provide a technical solution to guarantee, e.g., with a high level of probability, that an AP of the first and second APs may be able to obtain a TxOP over the wide channel BW, for example, on or after a start of an r-TWT SP, e.g., as described below.

In some demonstrative aspects, controller 124 may be configured to control, trigger, cause, and/or instruct an AP implemented by device 102 to determine a joint r-TWT SP for MAP operation with a second AP, e.g., an AP implemented by device 140, over a wide channel BW, e.g., as described below.

In some demonstrative aspects, the wide channel BW may include a primary channel of the first AP implemented by device 102 and a primary channel of the second AP implemented by device 140, e.g., as described below.

In some demonstrative aspects, the primary channel of the first AP implemented by device 102 may include a channel BW of at least 20 Megahertz (MHz), e.g., as described below.

In some demonstrative aspects, the wide channel BW may include a channel BW of at least 40MHz, e.g., as described below.

In other aspects, the primary channel of the first AP implemented by device 102 and/or the wide channel BW may include any other channel BW.

In some demonstrative aspects, controller 124 may be configured to control, trigger, cause, and/or instruct the AP implemented by device 102 to obtain a TxOP over at least the primary channel of the first AP implemented by device 102, e.g., as described below.

In some demonstrative aspects, the TxOP may cover at least the beginning of the joint r-TWT SP, e.g., as described below.

In some demonstrative aspects, controller 124 may be configured to control, trigger, cause, and/or instruct the AP implemented by device 102 to refrain from transmission over the wide channel BW, for example, during a first predefined time period from the beginning of the joint r-TWT SP, e.g., as described below.

In some demonstrative aspects, controller 124 may be configured to control, trigger, cause, and/or instruct the AP implemented by device 102 to transmit an M-AP trigger frame 115 over the wide channel BW, e.g., as described below.

In some demonstrative aspects, the M-AP trigger frame 115 may be configured to trigger the M-AP operation over the wide channel BW, e.g., as described below.

In some demonstrative aspects, controller 124 may be configured to control, trigger, cause, and/or instruct the AP implemented by device 102 to transmit the M-AP trigger frame 115 over the wide channel BW, for example, based on a criterion relating to a Clear-Channel-Assessment (CCA) state of the primary channel of the second AP, e.g., as described below.

In some demonstrative aspects, controller 124 may be configured to control, trigger, cause, and/or instruct the AP implemented by device 102 to transmit an M-AP trigger frame 115 over the wide channel BW, for example, based on a determination that the CCA state of the primary channel of the second AP is idle for a duration of a second predefined time period during the first predefined time period, e.g., as described below.

In some demonstrative aspects, controller 124 may be configured to control, trigger, cause, and/or instruct the AP implemented by device 102 to obtain the TxOP, for example, based on a determination that a Contention Period (CP) is to occur over the primary channel of the first AP implemented by device 102, for example, before the r-TWT, e.g., as described below.

In some demonstrative aspects, controller 124 may be configured to control, trigger, cause, and/or instruct the AP implemented by device 102 to end a transmission over the primary channel of the first AP implemented by device 102 at the beginning of the joint r-TWT SP, e.g., as described below.

In some demonstrative aspects, controller 124 may be configured to control, trigger, cause, and/or instruct the AP implemented by device 102 to ensure that a frame in the transmission over the primary channel of the first AP implemented by device 102 does not solicit an immediate response from a receiver of the frame, e.g., as described below.

In some demonstrative aspects, the first predefined time period, during which the first AP implemented by device 102 is to refrain from transmission over the wide channel BW, may include a Point Coordination Function (PCF) Inter-Frame-Space (PIFS), e.g., as described below.

In other aspects, the first predefined time period may include any other time period.

In some demonstrative aspects, the second predefined time period, during which the first AP implemented by device 102 is to determine that the CCA state of the primary channel of the second AP is idle, may be shorter than the first predefined time period, e.g., as described below.

In some demonstrative aspects, the second predefined time period may be equal to the first predefined time period, e.g., as described below.

In some demonstrative aspects, the second predefined time period may include a Short Inter-Frame-Space (SIFS), e.g., as described below.

In some demonstrative aspects, the second predefined time period may include a PIFS, e.g., as described below.

In other aspects, the second predefined time period may include any other time period.

In some demonstrative aspects, controller 124 may be configured to allow the AP implemented by device 102 to transmit the M-AP trigger frame 115, for example, based on a determination that the first AP implemented by device 102 is to perform a role of a sharing AP for the joint r-TWT SP, e.g., as described below.

In some demonstrative aspects, controller 124 may be configured to control, trigger, cause, and/or instruct the AP implemented by device 102 to determine that the first AP implemented by device 102 is to perform the role of the sharing AP for the joint r-TWT SP, for example, based on an AP role negotiation between the first AP implemented by device 102 and the second AP implemented by device 140, e.g., as described below.

In some demonstrative aspects, controller 124 may be configured to control, trigger, cause, and/or instruct the AP implemented by device 102 to coordinate the joint r-TWT SP with the second AP implemented by device 140, e.g., as described below.

In some demonstrative aspects, controller 124 may be configured to control, trigger, cause, and/or instruct the AP implemented by device 102 to perform the M-AP operation over the wide channel BW, for example, according to an FFR of the wide channel BW, e.g., as described below.

In other aspects, the M-AP operation over the wide channel BW may be configured according to any other additional or alternative mechanism.

In some demonstrative aspects, controller 124 may be configured to control, trigger, cause, and/or instruct the AP implemented by device 102 to perform the M-AP operation over the wide channel BW, for example, by enabling communication of the first AP implemented by device 102 with one or more first STAs over the wide channel BW, and restricting communications of the first AP implemented by device 102 with one or more second STAs to the primary channel of the first AP implemented by device 102, e.g., as described below.

In some demonstrative aspects, the one or more first STAs may be within a particular range from the first AP implemented by device 102, e.g., as described below
In some demonstrative aspects, the one or more second STAs may not be within the particular range from the first AP implemented by device 102, e.g., as described below.

In other aspects, the one or more first STAs and/or the one or more second STAs may be defined, identified, and/or selected according to any other additional or alternative criteria.

In some demonstrative aspects, controller 154 may be configured to control, trigger, cause, and/or instruct an AP implemented by device 140 to determine a joint r-TWT SP for MAP operation with another AP over a wide channel BW including a primary channel of the other AP and a primary channel of the AP implemented by device 140, e.g., as described below.

In some demonstrative aspects, controller 154 may be configured to control, trigger, cause, and/or instruct the AP implemented by device 140 to determine the joint r-TWT SP for the M-AP operation with the AP implemented by device 102 over the wide channel BW including the primary channel of the AP implemented by device 102 and the primary channel of the AP implemented by device 140, e.g., as described below.

In some demonstrative aspects, the primary channel of the AP implemented by device 140 may include a channel BW of at least 20MHz, e.g., as described below.

In other aspects, the primary channel of the AP implemented by device 140 may include any other channel BW.

In some demonstrative aspects, the wide channel BW may include the channel BW of the 40MHz, e.g., as described above.

In other aspects, the wide channel BW may include any other channel BW.

In some demonstrative aspects, controller 154 may be configured to control, trigger, cause, and/or instruct the AP implemented by device 140 to obtain a TxOP over at least the primary channel of the AP implemented by device 140, e.g., as described below.

In some demonstrative aspects, the TxOP over the primary channel of the AP implemented by device 140 may cover at least the beginning of the joint r-TWT SP, e.g., as described below.

In some demonstrative aspects, controller 154 may be configured to control, trigger, cause, and/or instruct the AP implemented by device 140 to refrain from transmission over the wide channel BW, for example, during the predefined time period from the beginning of the joint r-TWT SP, e.g., as described below.

In some demonstrative aspects, controller 154 may be configured to control, trigger, cause, and/or instruct the second AP implemented by device 140 to trigger the M-AP operation over the wide channel BW, for example, based on receipt of the M-AP trigger frame 115 from the AP implemented by device 102 over the wide channel BW, e.g., as described below.

In some demonstrative aspects, controller 154 may be configured to control, trigger, cause, and/or instruct the AP implemented by device 140 to obtain the TxOP over the primary channel of the AP implemented by device 140, for example, based on a determination that a CP is to occur over the primary channel of the AP implemented by device 140, for example, before the r-TWT, e.g., as described below.

In some demonstrative aspects, controller 154 may be configured to control, trigger, cause, and/or instruct the AP implemented by device 140 to end a transmission over the primary channel of the AP implemented by device 140, for example, at the beginning of the joint r-TWT SP, e.g., as described below.

In some demonstrative aspects, controller 154 may be configured to control, trigger, cause, and/or instruct the AP implemented by device 140 to ensure that a frame in the transmission over the primary channel of the AP implemented by device 140 does not solicit an immediate response from a receiver of the frame, e.g., as described below.

In some demonstrative aspects, controller 154 may be configured to control, trigger, cause, and/or instruct the AP implemented by device 140 to determine that the AP implemented by device 140 is to attempt to receive the M-AP trigger frame 115 from the AP implemented by device 102, for example, based on a determination that the AP implemented by device 140 is to perform a role of a shared AP for the joint r-TWT SP, e.g., as described below.

In some demonstrative aspects, controller 154 may be configured to control, trigger, cause, and/or instruct the AP implemented by device 140 to determine that the AP implemented by device 140 is to perform the role of the shared AP for the joint r-TWT SP, for example, based on an AP role negotiation between the AP implemented by device 140 and the AP implemented by device 102, e.g., as described below.

In some demonstrative aspects, controller 154 may be configured to control, trigger, cause, and/or instruct the AP implemented by device 140 to coordinate the joint r-TWT SP with the AP implemented by device 102, e.g., as described below.

In some demonstrative aspects, controller 154 may be configured to control, trigger, cause, and/or instruct the AP implemented by device 140 to perform the M-AP operation over the wide channel BW, for example, according to the FFR of the wide channel BW, e.g., as described below.

In other aspects, the M-AP operation over the wide channel BW may be configured according to any other additional or alternative mechanism.

In some demonstrative aspects, controller 154 may be configured to control, trigger, cause, and/or instruct the AP implemented by device 140 to perform the M-AP operation over the wide channel BW, for example, by enabling communication of the AP implemented by device 140 with one or more first STAs over the wide channel BW, and/or restricting communications of the AP implemented by device 140 with one or more second STAs to the primary channel of the AP implemented by device 140, e.g., as described below.

In some demonstrative aspects, the one or more first STAs may be within a particular range from the AP implemented by device 140, e.g., as described below.

In some demonstrative aspects, the one or more second STAs may not be within the particular range from the AP implemented by device 140, e.g., as described below.

In other aspects, the one or more first STAs and/or the one or more second STAs may be defined, identified, and/or selected according to any other additional or alternative criteria.

In some demonstrative aspects, device 102, device 140, and/or device 160 may be configured to implement one or more operations and/or functionalities of a joint r-TWT SP mechanism, which may be configured to provide a technical solution to support Multi-AP operation, e.g., as described below.

In some demonstrative aspects, the joint r-TWT SP mechanism may be configured to define a sharing AP and a shared AP for the Multi-AP operation, e.g., as described below.

In one example, an AP implemented by device 102 may perform the role of the sharing AP, and an AP implemented by device 140 may perform the role of the shared AP, for the Multi-AP operation, e.g., as described below.

In another example, an AP implemented by device 140 may perform the role of the sharing AP, and an AP implemented by device 102 may perform the role of the shared AP, for the Multi-AP operation.

In some demonstrative aspects, device 102, device 140, and/or device 160 may be configured to implement one or more operations and/or functionalities to coordinate a joint r-TWT SP for the Multi-AP operation, e.g., as described below.

In some demonstrative aspects, the joint r-TWT SP mechanism may be configured to define one or more methods to negotiate a role for each AP.

In some demonstrative aspects, the joint r-TWT SP mechanism may be configured to define one or more operations and/or functionalities for the sharing AP and the shared AP, e.g., as described below.

In some demonstrative aspects, the joint r-TWT SP mechanism may be configured to define that the sharing AP and/or the shared AP may select a subset of channels, e.g., when contention happens.

In some demonstrative aspects, the joint r-TWT SP mechanism may be configured to define that the sharing AP and/or the shared AP may terminate TxOP before the start of the joint r-TWT SP, e.g., even with no immediate response solicitation.

In some demonstrative aspects, the joint r-TWT SP mechanism may be configured to define that , transmission may be paused for a predefined interval, e.g., from a point of a beginning of the joint r-TWT.

In some demonstrative aspects, the joint r-TWT SP mechanism may be configured to define that the sharing AP and/or the shared AP may check the CCA on the wide channel BW, e.g., each on its secondary channel, for example, during the predefined interval. For example, the sharing AP and/or the shared AP may use the secondary channel, e.g., if idle, for example, for M-AP operation.

In some demonstrative aspects, the joint r-TWT SP mechanism may be configured to define that, for example, in case if both APs check the CCA on the wide channel BW, a particular AP, e.g., only the shared AP, may have access to the wide channel BW.

In some demonstrative aspects, the joint r-TWT SP mechanism may be configured to define a PIFS access on a secondary channel, for example, instead of doing a backoff, e.g., with some restrictions on a duration of the TxOP duration.

In some demonstrative aspects, it may be defined that two APs, e.g., an AP implemented by device 102 and an AP implemented by device 140, may be configured to coordinate a joint r-TWT SP, which may overlap in time, for example, for M-AP coordination, e.g., as described below.

In some demonstrative aspects, the two APs may be configured to negotiate that one AP may operate in a role of a sharing AP, and the other may operate in a role of a shared AP.

In some demonstrative aspects, the negotiation of the sharing AP/shared AP roles may be performed between the two APs, for example, using a negotiation between the two APs to coordinate one or more r-TWT SPs.

In some demonstrative aspects, a management entity may assign the role of a sharing AP or a shared AP to each AP, for example, when the two APs are part of a same management domain. According to these aspects, the negotiation between the two APs may not be required.

In one example, an AP, e.g., each AP, may try to access the wireless medium, for example, when a contention period occurs before a start of the r-TWT SP.

For example, a first AP may get channel access and start a TxOP, for example, on only a subset of the wide channel BW, e.g., only on a primary channel, for example, if the secondary channel is busy.

According to this example, M-AP operation may not be possible during the r-TWT SP. For example, in this case, another primary channel of a second AP, e.g., the secondary channel of the first AP, may not be part of the channels of this TxOP.

In some demonstrative aspects, the joint r-TWT SP mechanism may be configured to define that an AP is to ensure that one of the PPDUs in the TxOP ends, e.g., right at the start of the r-TWT SP.

In some demonstrative aspects, the joint r-TWT SP mechanism may be configured to define that the AP is to ensure that the PPDU does not solicit an immediate response from a receiver of the PPDU, and/or to include a management frame, a control frame, or A-control information of a mini-contention for TxOP channel expansion.

In some demonstrative aspects, the joint r-TWT SP mechanism may be configured to define that the AP will not transmit on the medium, e.g., in its primary channel, for a specific duration, for example, following the transmission of the PPDU.

In some demonstrative aspects, the length of the specific duration may be equal to PIFS, for example, as there may be regions where it is not allowed to have transmission pauses longer than PIFS.

In some demonstrative aspects, the joint r-TWT SP mechanism may be configured to define the specific duration to include a duration longer than PIFS.

In some demonstrative aspects, the joint r-TWT SP mechanism may be configured to define that during a PIFS in the coordinated r-TWT SP, e.g., a first PIFS of the coordinated r-TWT SP, there may be no transmission from a TxOP holder and responder on the wide channel BW.

In some demonstrative aspects, the joint r-TWT SP mechanism may be configured to define that during the specific duration, e.g., the PIFS duration, the AP, e.g., the TxOP holder, is to check CCA on one or more remaining secondary channels corresponding to the wide channel BW for the coordinated r-TWT SP, for example, for Multi-AP operation with the other AP.

In some demonstrative aspects, , the joint r-TWT SP mechanism may be configured to define that if the AP observes a CCA idle on the secondary channel during a predefined duration, e.g., SIFS, the AP may be considered to have gained channel access on the secondary channel, and that the TxOP of the AP may be expanded to incorporate the new APs.

In some demonstrative aspects, the joint r-TWT SP mechanism may be configured to define that only the sharing AP is allowed to check CCA and expand its TxOP, for example, when the two APs perform the same operations, for example, to avoid collisions between the two APs. For example, the definition that only the sharing AP is allowed to check CCA and expand its TxOP may provide a technical solution to increase a chance that the sharing AP may expand its TxOP to the wide channel BW, and may be able to trigger the shared AP for the Multi-AP operation.

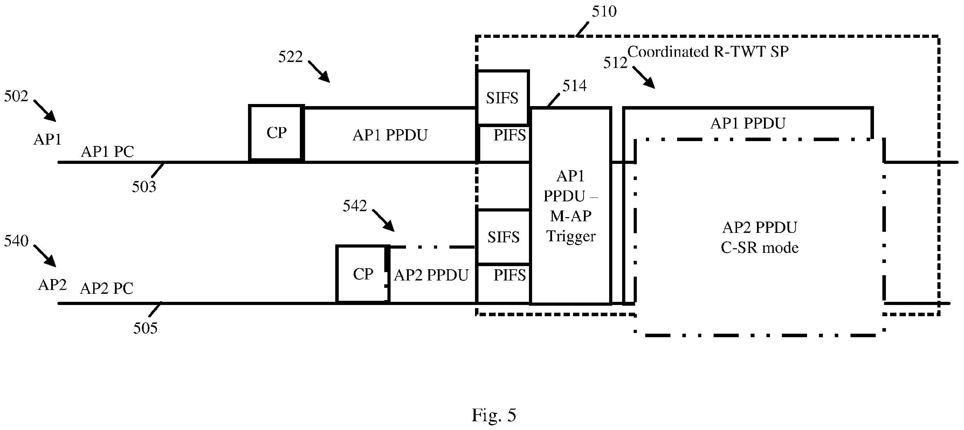

Reference is made to Fig. 5, which schematically illustrates a joint r-TWT SP 510 of a first AP 502 and a second AP 540 over a wide channel BW, in accordance with some demonstrative aspects.

For example, device 102 (Fig. 1) may be configured to perform one or more operations of, functionalities of, and/or a role of, AP 502, and/or device 140 (Fig. 1) may be configured to perform one or more operations of, functionalities of, and/or a role of, AP 540.

In some demonstrative aspects, as shown in Fig. 5, the wide channel BW may include a primary channel 503 of the first AP 502 and a primary channel 505 of the second AP 540. For example, the first AP 502 may handle the channel 505 as a secondary channel of the wide channel BW, and/or the second AP 540 may handle the channel 503 as a secondary channel of the wide channel BW.

In some demonstrative aspects, as shown in Fig. 5, AP 502 may obtain a TxOP 522 over the primary channel 503 of the first AP 502.

In some demonstrative aspects, as shown in Fig. 5, the TxOP 522 may extend over and/or cover the beginning of the joint r-TWT SP 510.

In some demonstrative aspects, as shown in Fig. 5, AP 540 may obtain a TxOP 542 over the primary channel 505 of the second AP 540.

In some demonstrative aspects, as shown in Fig. 5, the TxOP 542 may extend over and/or cover the beginning of the joint r-TWT SP 510.

In some demonstrative aspects, as shown in Fig. 5, AP 502 may refrain from transmission for a predefined duration, for example, a PIFS, e.g., from a beginning of the joint r-TWT SP 510.

In some demonstrative aspects, as shown in Fig. 5, AP 502 may check a CCA state of the channel 505, e.g., the secondary channel for AP 502, for a predefined duration, for example, for a duration of SIFS, during the PIFS.

In some demonstrative aspects, as shown in Fig. 5, AP 540 may refrain from transmission for a predefined duration, for example, a PIFS, from a beginning of the joint r-TWT SP 510.

In one example, the PIFS may include a predefined duration of 25 microseconds (us), and/or the SIFS may include a predefined duration of 16us.

In other aspects, the PIFS and the SIFS may include any other predefined durations.

In some demonstrative aspects, as shown in Fig. 5, AP 502 may transmit an M-AP trigger frame 514 to trigger M-AP operation 512 over the wide channel BW, for example, based on the determination that the CCA state of the channel 505 is idle during the SIFS duration.

In some demonstrative aspects, as shown in Fig. 5, AP 502, e.g., acting as a sharing AP, may be able to expand its TxOP for the M-AP operation 512 over the wide channel BW, for example, when the CCA state of the channel 505 is idle during the PIFS.

In some demonstrative aspects, as shown in Fig. 5, the M-AP operation 512 may support communication of a first PPDU of AP 502 and a second PPDU of AP 540 over the wide channel BW including the channels 503 and 505, for example, according to a Coordinated-SR (C-SR) mode.

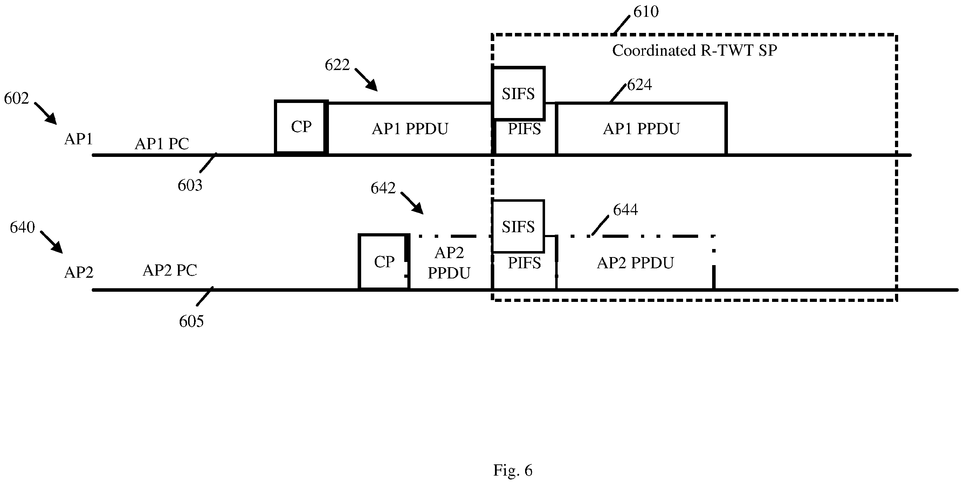

Reference is made to Fig. 6, which schematically illustrates a joint r-TWT SP 610 of a first AP 602 and a second AP 640 over a wide channel BW, in accordance with some demonstrative aspects.

For example, device 102 (Fig. 1) may be configured to perform one or more operations of, functionalities of, and/or a role of, AP 602, and/or device 140 (Fig. 1) may be configured to perform one or more operations of, functionalities of, and/or a role of, AP 640.

In some demonstrative aspects, as shown in Fig. 6, the wide channel BW may include a primary channel 603 of the first AP 602 and a primary channel 605 of the second AP 640. For example, the first AP 602 may handle the channel 605 as a secondary channel of the wide channel BW, and/or the second AP 640 may handle the channel 603 as a secondary channel of the wide channel BW.

In some demonstrative aspects, as shown in Fig. 6, AP 602 may obtain a TxOP 622 over the primary channel 603.

In some demonstrative aspects, as shown in Fig. 6, the TxOP 622 may extend over and/or cover the beginning of the joint r-TWT SP 610.

In some demonstrative aspects, as shown in Fig. 6, AP 640 may obtain a TxOP 642 over the primary channel 605.

In some demonstrative aspects, as shown in Fig. 6, the TxOP 642 may extend over and/or cover the beginning of the joint r-TWT SP 610.

In some demonstrative aspects, as shown in Fig. 6, AP 602 may refrain from transmission for a predefined duration, for example, a PIFS, e.g., from a beginning of the joint r-TWT SP 610.

In some demonstrative aspects, as shown in Fig. 6, AP 602 may check a CCA state of the channel 605, e.g., the secondary channel for AP 602, for a predefined duration, for example, for a duration of SIFS, during the PIFS.

In some demonstrative aspects, as shown in Fig. 6, AP 640 may refrain from transmission for a predefined duration, for example, a PIFS, from a beginning of the joint r-TWT SP 610.

In some demonstrative aspects, as shown in Fig. 6, AP 602, e.g., acting as a sharing AP, may not be able to expand its TxOP for M-AP operation over the wide channel BW.

In one example, AP 602 may not be able to expand its TxOP for M-AP operation, for example, based on a determination that the CCA state of the secondary channel of the first AP 602, e.g., channel 605, is not idle during the SIFS, for example, due to interference from one or more other STAs.

In some demonstrative aspects, as shown in Fig. 6, AP 602 may transmit a first PPDU 624 over the primary channel 603 during the r-TWT SP 610, e.g., when the AP 602 is not able to expand its TxOP for M-AP operation.

In some demonstrative aspects, as shown in Fig. 6, AP 640 may transmit a second PPDU 644 over the primary channel 605 during the r-TWT SP 610, e.g., when the AP 602 is not able to expand its TxOP for M-AP operation.

Referring back to Fig., 1, in some demonstrative aspects, device 102, device 140, and/or device 160 may be configured to implement one or more operations and/or functionalities of a joint r-TWT SP mechanism, which may define one or more behaviors for a sharing AP and a shared AP, e.g., as described below.

In some demonstrative aspects, the joint r-TWT SP mechanism may be configured to define that a sharing AP may check the CCA state of the secondary channel for a duration of a PIFS, e.g., instead of a SIFS, for example, prior to allowing the sharing AP to expand its TxOP to the wide channel BW. For example, the duration of a PIFS may be currently a condition for secondary channel access, e.g., in accordance with an *IEEE 802.11 Specification.*

In some demonstrative aspects, the definition that sharing AP is to check the CCA state of the secondary channel for a duration of a PIFS prior to allowing the sharing AP to expand its TxOP to the wide channel BW may be equivalent to allowing an AP member of a coordinated r-TWT SP having the role of a sharing AP to access the medium at a beginning of an r-TWT SP with PIFS access, for example, instead of doing a complete back off (BO).

In some demonstrative aspects, the joint r-TWT SP mechanism may be configured to define an extra condition that an AP, which was the TxOP holder of a previous TxOP on a same channel, is to define a TxOP having a duration that is lower than a particular threshold, e.g., lower than a TxOP limit.

For example, these definitions of the joint r-TWT SP mechanism may provide a technical solution, which may not be interpreted as a real increase in BW, e.g., during a TxOP, but may enable two TxOPs back to back with PIFS, e.g., or aggressive channel access.

In some demonstrative aspects, the joint r-TWT SP mechanism may be configured to define that a shared AP, which has gained a TxOP before a start of the r-TWT SP, would have to terminate its TxOP right at the start of the r-TWT SP, for example, to create a contention period right at that time.

For example, the sharing AP may check the CCA idle state of its secondary channel for the PIFS, for example, in order to expand its TxOP over the wide channel BW. For example, this scenario may provide a higher chance that the sharing AP may get channel access on the entire wide channel BW.

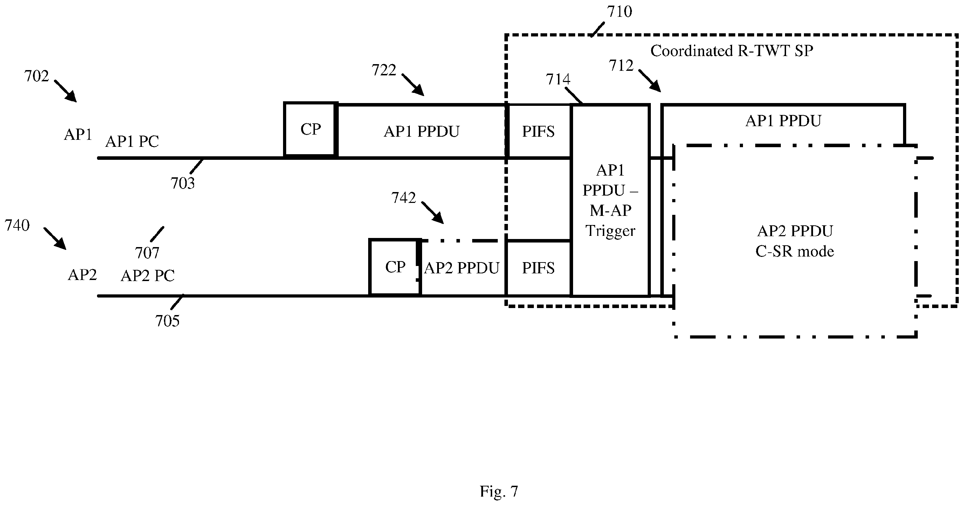

Reference is made to Fig. 7, which schematically illustrates a joint r-TWT SP 710 of a first AP 702 and a second AP 740 over a wide channel BW, in accordance with some demonstrative aspects.

For example, device 102 (Fig. 1) may be configured to perform one or more operations of, functionalities of, and/or a role of, AP 702, and/or device 140 (Fig. 1) may be configured to perform one or more operations of, functionalities of, and/or a role of, AP 740.

In some demonstrative aspects, as shown in Fig. 7, the wide channel BW may include a primary channel 703 of the first AP 702 and a primary channel 705 of the second AP 740. For example, the first AP 702 may handle the channel 705 as a secondary channel of the wide channel BW, and/or the second AP 740 may handle the channel 703 as a secondary channel of the wide channel BW.

In some demonstrative aspects, as shown in Fig. 7, AP 702 may obtain a TxOP 722 over the primary channel 703 of the first AP 702.

In some demonstrative aspects, as shown in Fig. 7, the TxOP 722 may extend over and/or cover the beginning of the joint r-TWT SP 710.

In some demonstrative aspects, as shown in Fig. 7, AP 740 may obtain a TxOP 742 over the primary channel 705 of the second AP 740.

In some demonstrative aspects, as shown in Fig. 7, the TxOP 742 may extend over and/or cover the beginning of the joint r-TWT SP 710.

In some demonstrative aspects, as shown in Fig. 7, AP 702 may refrain for a predefined duration, for example, a PIFS, from a beginning of the joint r-TWT SP 710.

In some demonstrative aspects, as shown in Fig. 7, AP 740 may refrain from transmission for a predefined duration, for example, a PIFS, from a beginning of the joint r-TWT SP 710.

In some demonstrative aspects, as shown in Fig. 7, AP 702 may check a CCA state of the channel 705, e.g., the secondary channel for AP 702, for a predefined duration, for example, for the duration of the PIFS.

In some demonstrative aspects, as shown in Fig. 7, AP 702 may transmit an M-AP trigger frame 714 to trigger M-AP operation 712 over the wide channel BW, for example, based on the determination that the CCA state of the channel 705 is idle during the PIFS duration.

In some demonstrative aspects, as shown in Fig. 7, AP 702, e.g., acting as a sharing AP, may be able to expand its TxOP for the M-AP operation 712 over the wide channel BW, for example, when the CCA state of the channel 705 is idle during the PIFS.

In some demonstrative aspects, as shown in Fig. 7, the M-AP operation 712 may support communication of a first PPDU of AP 702 and a second PPDU of AP 740 over the wide channel BW including the channels 703 and 705, for example, according to a C-SR mode.

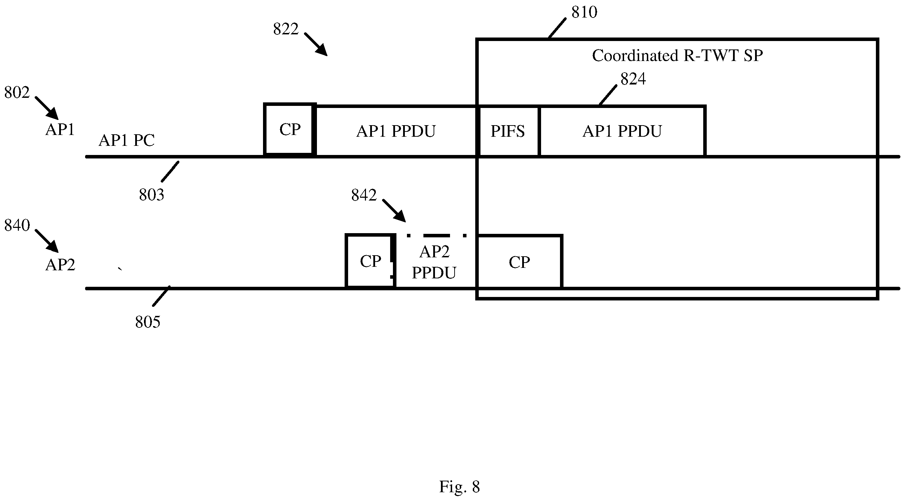

Reference is made to Fig. 8, which schematically illustrates a joint r-TWT SP 810 of a first AP 802 and a second AP 840 over a wide channel BW, in accordance with some demonstrative aspects.

For example, device 102 (Fig. 1) may be configured to perform one or more operations of, functionalities of, and/or a role of, AP 802, and/or device 140 (Fig. 1) may be configured to perform one or more operations of, functionalities of, and/or a role of, AP 840.

In some demonstrative aspects, as shown in Fig. 8, the wide channel BW may include a primary channel 803 of the first AP 802 and a primary channel 805 of the second AP 840. For example, the first AP 802 may handle the channel 805 as a secondary channel of the wide channel BW, and/or the second AP 840 may handle the channel 803 as a secondary channel of the wide channel BW.

In some demonstrative aspects, as shown in Fig. 8, AP 802 may obtain a TxOP 822 over the primary channel 803.

In some demonstrative aspects, as shown in Fig. 8, the TxOP 822 may extend over and/or cover the beginning of the joint r-TWT SP 810.

In some demonstrative aspects, as shown in Fig. 8, AP 840 may obtain a TxOP 842 over the primary channel 805.

In some demonstrative aspects, as shown in Fig. 8, the TxOP 842 may extend over and/or cover the beginning of the joint r-TWT SP 810.

In some demonstrative aspects, as shown in Fig. 8, AP 802 may refrain from transmission for a predefined duration, for example, a PIFS, from a beginning of the joint r-TWT SP 810.

In some demonstrative aspects, as shown in Fig. 8, AP 802 may check a CCA state of the channel 805, e.g., the secondary channel for AP 802, for a predefined duration, for example, for the duration of the PIFS.

In some demonstrative aspects, as shown in Fig. 8, AP 840 may refrain from transmission for a predefined duration, for example, a PIFS, from a beginning of the joint r-TWT SP 810.

In some demonstrative aspects, as shown in Fig. 8, AP 802, e.g., acting as a sharing AP, may not be able to expand its TxOP for M-AP operation over the wide channel BW.

In one example, AP 802 may not be able to expand its TxOP for M-AP operation, for example, based on a determination that the CCA state of the secondary channel of the first AP 802, e.g., channel 805, is not idle during the PIFS, for example, due to interference from one or more other STAs.

In some demonstrative aspects, as shown in Fig. 8, AP 802 may transmit a PPDU 824 over the primary channel 803 during the r-TWT SP 810, e.g., when the AP 802 is not able to expand its TxOP for M-AP operation.

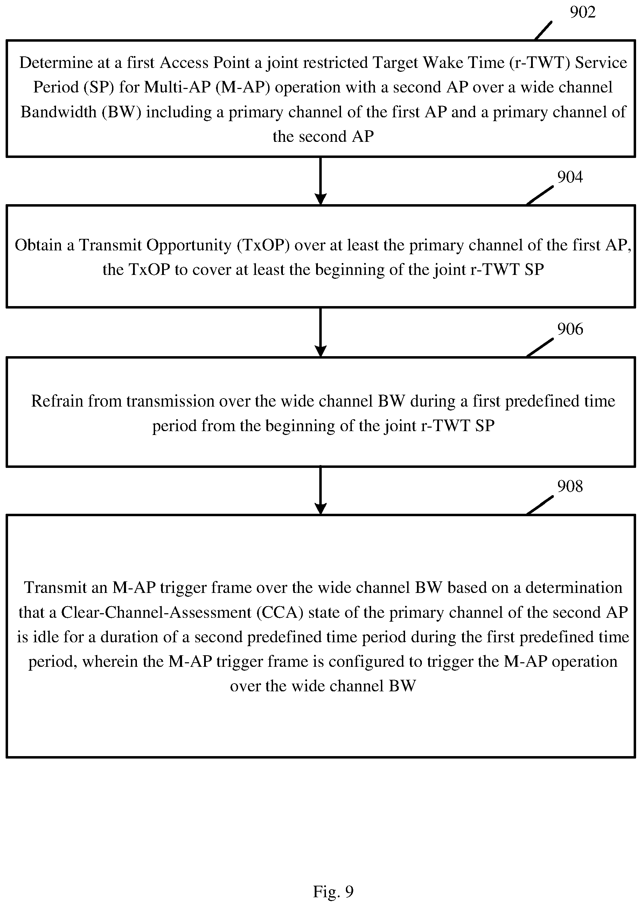

Reference is made to Fig. 9, which schematically illustrates a method of M-AP operation over a wide channel BW, in accordance with some demonstrative aspects. For example, one or more of the operations of the method of Fig. 9 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 902, the method may include determining at a first AP a joint r-TWT SP for M-AP operation with a second AP over a wide channel BW including a primary channel of the first AP and a primary channel of the second AP. For example, controller 124 (Fig. 1) may be configured to cause, trigger, and/or control the AP implemented by device 102 (Fig. 1) to determine the joint r-TWT SP for the M-AP operation with the second AP implemented by device 140 (Fig. 1) over the wide channel BW including the primary channel of the first AP implemented by device 102 (Fig. 1) and the primary channel of the second AP implemented by device 140 (Fig. 1), e.g., as described above.

As indicated at block 904, the method may include obtaining a TxOP over at least the primary channel of the first AP. For example, the TxOP may cover at least the beginning of the r-TWT SP. For example, controller 124 (Fig. 1) may be configured to cause, trigger, and/or control the AP implemented by device 102 (Fig. 1) to obtain the TxOP over the primary channel of the first AP implemented by device 102 (Fig. 1), e.g., as described above.

As indicated at block 906, the method may include refraining from transmission over the wide channel BW during a first predefined time period from the beginning of the r-TWT SP. For example, controller 124 (Fig. 1) may be configured to cause, trigger, and/or control the AP implemented by device 102 (Fig. 1) to refrain from transmission over the wide channel BW during the first predefined time period from the beginning of the r-TWT SP, e.g., as described above.

As indicated at block 908, the method may include transmitting an M-AP trigger frame over the wide channel BW, for example, based on a determination that a CCA state of the primary channel of the second AP is idle for a duration of a second predefined time period during the first predefined time period. For example, the M-AP trigger frame may be configured to trigger the M-AP operation over the wide channel BW. For example, controller 124 (Fig. 1) may be configured to cause, trigger, and/or control the AP implemented by device 102 (Fig. 1) to transmit the M-AP trigger frame 115 (Fig. 1) over the wide channel BW, for example, based on the determination that the CCA state of the primary channel of the AP implemented by device 140 (Fig. 1) is idle for the duration of the second predefined time period during the first predefined time period, e.g., as described above.

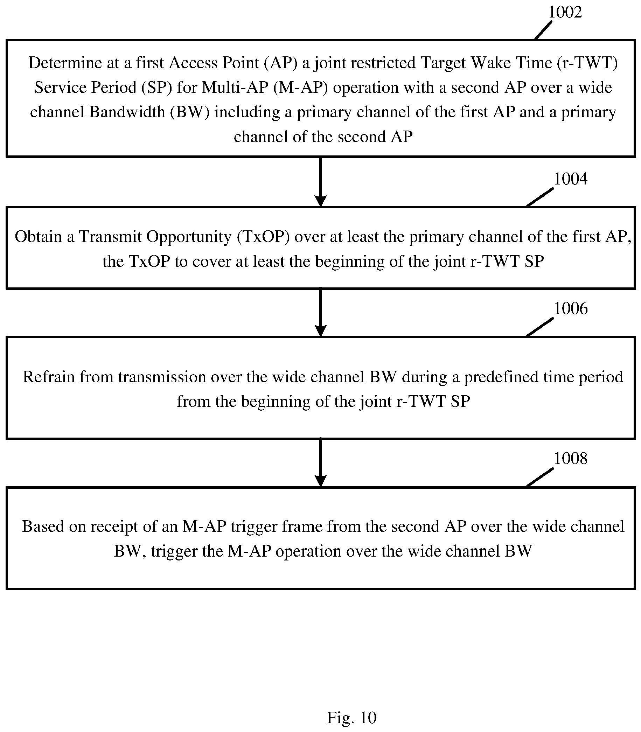

Reference is made to Fig. 10, which schematically illustrates a method of M-AP operation over a wide channel BW, in accordance with some demonstrative aspects. For example, one or more of the operations of the method of Fig. 10 may be performed by one or more elements of a system, e.g., system 100 (Fig. 1), for example, one or more wireless devices, e.g., device 102 (Fig. 1), device 140 (Fig. 1), and/or device 160 (Fig. 1), a controller, e.g., controller 124 (Fig. 1) and/or controller 154 (Fig. 1), a radio, e.g., radio 114 (Fig. 1) and/or radio 144 (Fig. 1), and/or a message processor, e.g., message processor 128 (Fig. 1) and/or message processor 158 (Fig. 1).

As indicated at block 1002, the method may include determining at a first AP a joint r-TWT SP for M-AP operation with a second AP over a wide channel BW including a primary channel of the first AP and a primary channel of the second AP. For example, controller 154 (Fig. 1) may be configured to cause, trigger, and/or control the AP implemented by device 140 (Fig. 1) to determine the joint r-TWT SP for the M-AP operation with the AP implemented by device 102 (Fig. 1) over the wide channel BW including the primary channel of the AP implemented by device 102 (Fig. 1) and the primary channel of the AP implemented by device 140 (Fig. 1), e.g., as described above.

As indicated at block 1004, the method may include obtaining a TxOP over at least the primary channel of the first AP. For example, the TxOP may cover at least the beginning of the r-TWT SP. For example, controller 154 (Fig. 1) may be configured to cause, trigger, and/or control the AP implemented by device 140 (Fig. 1) to obtain the TxOP over the primary channel of the AP implemented by device 140 (Fig. 1), e.g., as described above.

As indicated at block 1006, the method may include refraining from transmission over the wide channel BW during a predefined time period from the beginning of the r-TWT SP. For example, controller 154 (Fig. 1) may be configured to cause, trigger, and/or control the AP implemented by device 140 (Fig. 1) to refrain from transmission over the wide channel BW during the predefined time period from the beginning of the r-TWT SP, e.g., as described above.

As indicated at block 1008, the method may include triggering the M-AP operation over the wide channel BW, for example, based on receipt of an M-AP trigger frame from the second AP over the wide channel BW. For example, controller 154 (Fig. 1) may be configured to cause, trigger, and/or control the AP implemented by device 140 (Fig. 1) to trigger the M-AP operation over the wide channel BW, for example, based on receipt of the M-AP trigger frame 115 (Fig. 1) from the AP implemented by device 102 (Fig. 1) over the wide channel BW, e.g., as described above.

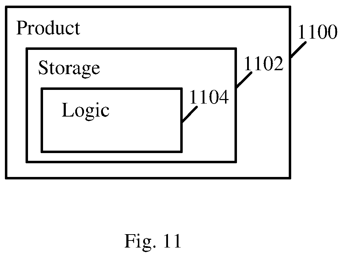

Reference is made to Fig. 11, which schematically illustrates a product of manufacture 1100, in accordance with some demonstrative aspects. Product 1100 may include one or more tangible computer-readable ("machine-readable") non-transitory storage media 1102, which may include computer-executable instructions, e.g., implemented by logic 1104, operable to, when executed by at least one computer processor, enable the at least one computer processor to implement one or more operations at device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1); to cause device 102 (Fig. 1), device 140 (Fig. 1), device 160 (Fig. 1), controller 124 (Fig. 1), controller 154 (Fig. 1), message processor 128 (Fig. 1), message processor 158 (Fig. 1), radio 114 (Fig. 1), radio 144 (Fig. 1), transmitter 118 (Fig. 1), transmitter 148 (Fig. 1), receiver 116 (Fig. 1), and/or receiver 146 (Fig. 1) to perform, trigger and/or implement one or more operations and/or functionalities; and/or to perform, trigger and/or implement one or more operations and/or functionalities described with reference to the Figs. 1, 2, 3, 4, 5, 6, 7, 8, 9 and 10, and/or one or more operations described herein. The phrases "non-transitory machine-readable medium" and "computer-readable non-transitory storage media" may be directed to include all machine and/or computer readable media, with the sole exception being a transitory propagating signal.

In some demonstrative aspects, product 1100 and/or machine readable storage media 1102 may include one or more types of computer-readable storage media capable of storing data, including volatile memory, non-volatile memory, removable or non-removable memory, erasable or non-erasable memory, writeable or re-writeable memory, and the like. For example, machine readable storage media 1102 may include, RAM, DRAM, Double-Data-Rate DRAM (DDR-DRAM), SDRAM, static RAM (SRAM), ROM, programmable ROM (PROM), erasable programmable ROM (EPROM), electrically erasable programmable ROM (EEPROM), flash memory (e.g., NOR or NAND flash memory), content addressable memory (CAM), polymer memory, phase-change memory, ferroelectric memory, silicon-oxide-nitride-oxide-silicon (SONOS) memory, a disk, a hard drive, and the like. The computer-readable storage media may include any suitable media involved with downloading or transferring a computer program from a remote computer to a requesting computer carried by data signals embodied in a carrier wave or other propagation medium through a communication link, e.g., a modem, radio or network connection.

In some demonstrative aspects, logic 1104 may include instructions, data, and/or code, which, if executed by a machine, may cause the machine to perform a method, process and/or operations as described herein. The machine may include, for example, any suitable processing platform, computing platform, computing device, processing device, computing system, processing system, computer, processor, or the like, and may be implemented using any suitable combination of hardware, software, firmware, and the like.

In some demonstrative aspects, logic 1104 may include, or may be implemented as, software, a software module, an application, a program, a subroutine, instructions, an instruction set, computing code, words, values, symbols, and the like. The instructions may include any suitable type of code, such as source code, compiled code, interpreted code, executable code, static code, dynamic code, and the like. The instructions may be implemented according to a predefined computer language, manner or syntax, for instructing a processor to perform a certain function. The instructions may be implemented using any suitable high-level, low-level, objectoriented, visual, compiled and/or interpreted programming language, machine code, and the like.

### EXAMPLES

The following examples pertain to further aspects.

Example 1 includes an apparatus comprising logic and circuitry configured to cause a first Access Point (AP) to determine a joint restricted Target Wake Time (r-TWT) Service Period (SP) for Multi-AP (M-AP) operation with a second AP over a wide channel Bandwidth (BW) comprising a primary channel of the first AP and a primary channel of the second AP; obtain a Transmit Opportunity (TxOP) over at least the primary channel of the first AP, the TxOP to cover at least the beginning of the joint r-TWT SP; refrain from transmission over the wide channel BW during a first predefined time period from the beginning of the joint r-TWT SP; and transmit an M-AP trigger frame over the wide channel BW based on a determination that a Clear-Channel-Assessment (CCA) state of the primary channel of the second AP is idle for a duration of a second predefined time period during the first predefined time period, wherein the M-AP trigger frame is configured to trigger the M-AP operation over the wide channel BW.

Example 2 includes the subject matter of Example 1, and optionally, wherein the apparatus is configured to cause the first AP to obtain the TxOP based on a determination that a Contention Period (CP) is to occur over the primary channel of the first AP before the joint r-TWT SP.

Example 3 includes the subject matter of Example 1 or 2, and optionally, wherein the apparatus is configured to cause the first AP to end a transmission over the primary channel of the first AP at the beginning of the joint r-TWT SP.

Example 4 includes the subject matter of Example 3, and optionally, wherein the apparatus is configured to cause the first AP to ensure that a frame in the transmission over the primary channel of the first AP does not solicit an immediate response from a receiver of the frame.

Example 5 includes the subject matter of any one of Examples 1-4, and optionally, wherein the apparatus is configured to allow the first AP to transmit the M-AP trigger frame based on a determination that the first AP is to perform a role of a sharing AP for the joint r-TWT SP.

Example 6 includes the subject matter of Example 5, and optionally, wherein the apparatus is configured to cause the first AP to determine that the first AP is to perform the role of the sharing AP for the joint r-TWT SP based on an AP role negotiation between the first AP and the second AP.

Example 7 includes the subject matter of any one of Examples 1-6, and optionally, wherein the first predefined time period comprises a Point Coordination Function (PCF) Inter-Frame-Space (PIFS).

Example 8 includes the subject matter of any one of Examples 1-7, and optionally, wherein the second predefined time period is shorter than the first predefined time period.

Example 9 includes the subject matter of any one of Examples 1-7, and optionally, wherein the second predefined time period is equal to the first predefined time period.

Example 10 includes the subject matter of any one of Examples 1-7, and optionally, wherein the second predefined time period comprises a Short Inter-Frame-Space (SIFS).

Example 11 includes the subject matter of any one of Examples 1-7, and optionally, wherein the second predefined time period comprises a Point Coordination Function (PCF) Inter-Frame-Space (PIFS).

Example 12 includes the subject matter of any one of Examples 1-11, and optionally, wherein the apparatus is configured to cause the first AP to coordinate the joint r-TWT SP with the second AP.

Example 13 includes the subject matter of any one of Examples 1-12, and optionally, wherein the apparatus is configured to cause the first AP to perform the M-AP operation over the wide channel BW according to a Fractional Frequency Reuse (FFR) of the wide channel BW.

Example 14 includes the subject matter of any one of Examples 1-13, and optionally, wherein the apparatus is configured to cause the first AP to perform the M-AP operation over the wide channel BW by enabling communication of the first AP with one or more first STAs over the wide channel BW, and restricting communications of the first AP with one or more second STAs to the primary channel of the first AP, wherein the one or more first STAs are within a particular range from the first AP, and wherein the one or more second STAs are not within the particular range from the first AP.

Example 15 includes the subject matter of any one of Examples 1-14, and optionally, wherein the primary channel of the first AP comprises a channel BW of at least 20 Megahertz (MHz), wherein the wide channel BW comprises a channel BW of at least 40MHz.

Example 16 includes the subject matter of any one of Examples 1-15, and optionally, comprising at least one radio to transmit the M-AP trigger frame.

Example 17 includes the subject matter of Example 16, and optionally, comprising one or more antennas connected to the radio, and a processor to execute instructions of an operating system of the first AP.

Example 18 includes an apparatus comprising logic and circuitry configured to cause a first Access Point (AP) to determine a joint restricted Target Wake Time (r-TWT) Service Period (SP) for Multi-AP (M-AP) operation with a second AP over a wide channel Bandwidth (BW) comprising a primary channel of the first AP and a primary channel of the second AP; obtain a Transmit Opportunity (TxOP) over at least the primary channel of the first AP, the TxOP to cover at least the beginning of the joint r-TWT SP; refrain from transmission over the wide channel BW during a predefined time period from the beginning of the joint r-TWT SP; and based on receipt of an M-AP trigger frame from the second AP over the wide channel BW, trigger the M-AP operation over the wide channel BW.

Example 19 includes the subject matter of Example 18, and optionally, wherein the apparatus is configured to cause the first AP to obtain the TxOP based on a determination that a Contention Period (CP) is to occur over the primary channel of the first AP before the joint r-TWT SP.

Example 20 includes the subject matter of Example 18 or 19, and optionally, wherein the apparatus is configured to cause the first AP to end a transmission over the primary channel of the first AP at the beginning of the joint r-TWT SP.

Example 21 includes the subject matter of Example 20, and optionally, wherein the apparatus is configured to cause the first AP to ensure that a frame in the transmission over the primary channel of the first AP does not solicit an immediate response from a receiver of the frame.

Example 22 includes the subject matter of any one of Examples 18-21, and optionally, wherein the apparatus is configured to determine that the first AP is to attempt to receive the MAP trigger frame from the second AP based on a determination that the first AP is to perform a role of a shared AP for the joint r-TWT SP.

Example 23 includes the subject matter of Example 22, and optionally, wherein the apparatus is configured to cause the first AP to determine that the first AP is to perform the role of the shared AP for the joint r-TWT SP based on an AP role negotiation between the first AP and the second AP.

Example 24 includes the subject matter of any one of Examples 18-26, and optionally, wherein the predefined time period comprises a Point Coordination Function (PCF) Inter-Frame-Space (PIFS).

Example 25 includes the subject matter of any one of Examples 18-24, and optionally, wherein the apparatus is configured to cause the first AP to coordinate the joint r-TWT SP with the second AP.

Example 26 includes the subject matter of any one of Examples 18-25, and optionally, wherein the apparatus is configured to cause the first AP to perform the M-AP operation over the wide channel BW according to a Fractional Frequency Reuse (FFR) of the wide channel BW.

Example 27 includes the subject matter of any one of Examples 18-26, and optionally, wherein the apparatus is configured to cause the first AP to perform the M-AP operation over the wide channel BW by enabling communication of the first AP with one or more first STAs over the wide channel BW, and restricting communications of the first AP with one or more second STAs to the primary channel of the first AP, wherein the one or more first STAs are within a particular range from the first AP, and wherein the one or more second STAs are not within the particular range from the first AP.

Example 28 includes the subject matter of any one of Examples 18-27, and optionally, wherein the primary channel of the first AP comprises a channel BW of at least 20 Megahertz (MHz), wherein the wide channel BW comprises a channel BW of at least 40MHz.

Example 29 includes the subject matter of any one of Examples 18-28, and optionally, comprising at least one radio to receive the M-AP trigger frame.

Example 30 includes the subject matter of Example 29, and optionally, comprising one or more antennas connected to the radio, and a processor to execute instructions of an operating system of the first AP.

Example 31 comprises a wireless communication device comprising the apparatus of any of Examples 1-30.

Example 32 comprises a mobile device comprising the apparatus of any of Examples 1-30.

Example 33 comprises an apparatus comprising means for executing any of the described operations of any of Examples 1-30.

Example 34 comprises a product comprising one or more tangible computer-readable non-transitory storage media comprising instructions operable to, when executed by at least one processor, enable the at least one processor to cause a wireless communication device to perform any of the described operations of any of Examples 1-30.

Example 35 comprises an apparatus comprising: a memory interface; and processing circuitry configured to: perform any of the described operations of any of Examples 1-30.

Example 36 comprises a method comprising any of the described operations of any of Examples 1-30.

Functions, operations, components and/or features described herein with reference to one or more aspects, may be combined with, or may be utilized in combination with, one or more other functions, operations, components and/or features described herein with reference to one or more other aspects, or vice versa.

While certain features have been illustrated and described herein, many modifications, substitutions, changes, and equivalents may occur to those skilled in the art. It is, therefore, to be understood that the appended claims are intended to cover all such modifications and changes as fall within the true spirit of the disclosure.

## Claims

1. A method to be performed at a first Access Point (AP), the method comprising:
determining a joint restricted Target Wake Time (r-TWT) Service Period (SP) for Multi-AP (M-AP) operation with a second AP over a wide channel Bandwidth (BW) comprising a primary channel of the first AP and a primary channel of the second AP;
obtaining a Transmit Opportunity (TxOP) over at least the primary channel of the first AP, the TxOP to cover at least the beginning of the joint r-TWT SP;
refraining from transmission over the wide channel BW during a first predefined time period from the beginning of the joint r-TWT SP; and
transmitting an M-AP trigger frame over the wide channel BW based on a determination that a Clear-Channel-Assessment (CCA) state of the primary channel of the second AP is idle for a duration of a second predefined time period during the first predefined time period, wherein the M-AP trigger frame is configured to trigger the M-AP operation over the wide channel BW.

2. The method of claim 1 comprising obtaining the TxOP based on a determination that a Contention Period (CP) is to occur over the primary channel of the first AP before the joint r-TWT SP.

3. The method of claim 1 or 2 comprising causing the first AP to end a transmission over the primary channel of the first AP at the beginning of the joint r-TWT SP.

4. The method of claim 3 comprising causing the first AP to ensure that a frame in the transmission over the primary channel of the first AP does not solicit an immediate response from a receiver of the frame.

5. The method of any one of claims 1-4 comprising allowing the first AP to transmit the M-AP trigger frame based on a determination that the first AP is to perform a role of a sharing AP for the joint r-TWT SP.

6. The method of claim 5 comprising determining that the first AP is to perform the role of the sharing AP for the joint r-TWT SP based on an AP role negotiation between the first AP and the second AP.

7. The method of any one of claims 1-6, wherein the first predefined time period comprises a Point Coordination Function (PCF) Inter-Frame-Space (PIFS).

8. The method of any one of claims 1-7, wherein the second predefined time period comprises a Short Inter-Frame-Space (SIFS) or a Point Coordination Function (PCF) Inter-Frame-Space (PIFS).

9. The method of any one of claims 1-8 comprising coordinating the joint r-TWT SP with the second AP.

10. The method of any one of claims 1-9 comprising performing the M-AP operation over the wide channel BW according to a Fractional Frequency Reuse (FFR) of the wide channel BW.

11. The method of any one of claims 1-10 comprising performing the M-AP operation over the wide channel BW by enabling communication of the first AP with one or more first STAs over the wide channel BW, and restricting communications of the first AP with one or more second STAs to the primary channel of the first AP, wherein the one or more first STAs are within a particular range from the first AP, and wherein the one or more second STAs are not within the particular range from the first AP.

12. The method of any one of claims 1-11, wherein the primary channel of the first AP comprises a channel BW of at least 20 Megahertz (MHz), wherein the wide channel BW comprises a channel BW of at least 40MHz.

13. An apparatus comprising a controller configured to cause a first Access Point (AP) to perform the method of any one of claims 1-12.

14. The apparatus of claim 13 comprising at least one radio to transmit the M-AP trigger frame, one or more antennas connected to the radio, and a processor to execute instructions of an operating system.

15. A product comprising one or more tangible computer-readable non-transitory storage media comprising instructions operable to, when executed by at least one processor, enable the at least one processor to cause a first Access Point (AP) to perform the method of any one of claims 1-12.
